# EUROPEAN PATENT APPLICATION

(11) **EP 4 704 479 A1**
(43) Date of publication of application: **04.03.2026**
(21) Application number: 23947156.8
(22) Date of filing: 03.08.2023
(51) Int. Cl.: H04W 72/0453

(54) **RESOURCE ALLOCATION METHOD AND APPARATUS, AND DEVICE**

(71) Applicant: New H3C Technologies Co., Ltd., Hangzhou, Zhejiang 310052 (CN)
(72) Inventor: ZHOU, Lei, Beijing 100102 (CN); KONG, Lei, Beijing 100102 (CN)
(74) Representative: 2SPL Patentanwälte PartG mbB
(86) International application number: PCT/CN2023/111011
(87) International publication number: WO 2025/025212

(57) **Abstract**

The present disclosure provides a resource allocation method and apparatus and a device. The method includes: sending BWP frequency domain resource configuration information to a UE, where the BWP frequency domain (FD) resource configuration information includes a mapping relationship between resource identifier(ID) and SBFD FD resource; and the resource ID includes a BWP identifier and a carrier ID; sending target BWP indication information to the UE to enable the UE to obtain a target BWP configuration pair corresponding to the target BWP indication information from a BWP activation configuration table, where the target BWP configuration pair includes a target BWP identifier and a target carrier ID, and to determine, based on the mapping relationship between the resource ID and the SBFD FD resource, a target SBFD FD resource associated with the target BWP ID and the target carrier ID; where the BWP activation configuration table includes a mapping relationship between BWP indication information and BWP configuration pair. By the technical solutions of the present disclosure, the resource utilization rate can be increased.

## Description

### TECHNICAL FIELD

The present disclosure relates to the field of communication technologies and in particular to resource allocation methods and apparatuses and devices.

### BACKGROUND

Time division duplex (TDD) systems are widely applied in mobile communication systems such as 5G system.

In the TDD systems, a frame structure is divided into a DownLink (DL) slot, an UpLink (UL) slot and a special slot. The DL slot includes a set of DL symbols and downlink data is processed on the frequency domain resources corresponding to these DL symbols. The UL slot includes a plurality of UL symbols and uplink data is processed on the frequency domain resources corresponding to these UL symbols. The flexible slot includes at least one flexible (F) symbol. The F symbol is used for DL, and that is, downlink data is processed on the frequency domain resources corresponding to the F symbol; the F symbol may also be used for UL, and that is, uplink data is processed on the frequency domain resources corresponding to the F symbol; the F symbol may also be used for Guard Period (GP), and that is, uplink-downlink switching protection is performed on the frequency domain resources corresponding to the F symbol.

The TDD system may work in a Half Duplex (HD) mode, that is, at a same moment, same frequency domain resources can be used only for UL or DL.

### SUMMARY

The present disclosure provides a resource allocation method, which is applied to a base station. The method includes:
sending bandwidth part (BWP) frequency domain resource configuration information to a user equipment (UE), where the BWP frequency domain resource configuration information includes a mapping relationship between resource identifier and sub-band full duplex (SBFD) frequency domain resource; and the resource identifier includes a BWP identifier and a carrier identifier; and
sending target BWP indication information to the user equipment, where the target BWP indication information is configured to enable the user equipment to obtain a target BWP configuration pair corresponding to the target BWP indication information from a BWP activation configuration table, and the target BWP configuration pair includes a target BWP identifier and a target carrier identifier, and to determine, based on the mapping relationship between the resource identifier and the SBFD frequency domain resource, a target SBFD frequency domain resource associated with the target BWP identifier and the target carrier identifier; where the BWP activation configuration table includes a mapping relationship between BWP indication information and BWP configuration pair.

The present disclosure provides a resource allocation method, which is applied to a user equipment. The method includes:
receiving bandwidth part (BWP) frequency domain resource configuration information from a base station, where the BWP frequency domain resource configuration information includes a mapping relationship between resource identifier and sub-band full duplex (SBFD) frequency domain resource; and the resource identifier includes a BWP identifier and a carrier identifier;
receiving target BWP indication information from the base station, and obtaining a target BWP configuration pair corresponding to the target BWP indication information from an obtained BWP activation configuration table, where the target BWP configuration pair includes a target BWP identifier and a target carrier identifier; the BWP activation configuration table includes a mapping relationship between BWP indication information and BWP configuration pair;
determining, based on the mapping relationship between resource identifier and SBFD frequency domain resource, a target SBFD frequency domain resource associated with the target BWP identifier and the target carrier identifier in the target BWP configuration pair.

The present disclosure provides a resource allocation method, which is applied to a base station. The method includes:
sending sub-band full duplex (SBFD) resource allocation information to a user equipment, where the SBFD resource allocation information is configured to indicate SBFD frequency domain resources configured in multiple carriers in a carrier set, or an SBFD frequency domain resource configured in each carrier of multiple carriers; where in the SBFD frequency domain resources configured in multiple carriers in the carrier set, there is at least one set of opposite slots in different carriers of the carrier set; in the SBFD frequency domain resource configured in each carrier of multiple carriers, there is at least one set of opposite slots in the carrier; where the opposite slots include the uplink slot and the downlink slot;
sending SBFD configuration information corresponding to the carrier to the user equipment, where the SBFD configuration information is configured to indicate that the SBFD frequency domain resource in the carrier is valid or invalid.

The present disclosure provides a resource allocation method, which is applied to a user equipment. The method includes:
receiving sub-band full duplex (SBFD) resource allocation information from a base station, where the SBFD resource allocation information is configured to indicate SBFD frequency domain resources configured in multiple carriers in a carrier set, or an SBFD frequency domain resource configured in each carrier of the multiple carriers; where in the SBFD frequency domain resources configured in multiple carriers in the carrier set, there is at least one set of opposite slots in different carriers of the carrier set; in the SBFD frequency domain resource configured in each carrier of multiple carriers, there is at least one set of opposite slots in the carrier; where the opposite slots include the uplink slot and the downlink slot;
receiving SBFD configuration information corresponding to the carrier from the base station, where the SBFD configuration information is configured to indicate that the SBFD frequency domain resource in the carrier is valid or invalid.

The present disclosure provides a resource allocation apparatus, which is applied to a base station. The apparatus includes:
an obtaining module, configured to obtain bandwidth part (BWP) frequency domain resource configuration information;
a sending module, configured to send the BWP frequency domain resource configuration information to a user equipment, where the BWP frequency domain resource configuration information includes a mapping relationship between resource identifier and sub-band full duplex (SBFD) frequency domain resource; and the resource identifier includes a BWP identifier and a carrier identifier;
where the sending module is further configured to send target BWP indication information to the user equipment, where the target BWP indication information is configured to enable the user equipment to obtain a target BWP configuration pair corresponding to the target BWP indication information from a BWP activation configuration table, and the target BWP configuration pair includes a target BWP identifier and a target carrier identifier, and to determine, based on the mapping relationship between the resource identifier and the SBFD frequency domain resource, a target SBFD frequency domain resource associated with the target BWP identifier and the target carrier identifier; where the BWP activation configuration table includes a mapping relationship between BWP indication information and BWP configuration pair.

The present disclosure provides a resource allocation apparatus, which is applied to a user equipment. The apparatus includes:
a receiving module, configured to receive bandwidth part (BWP) frequency domain resource configuration information from a base station, where the BWP frequency domain resource configuration information includes a mapping relationship between resource identifier and sub-band full duplex (SBFD) frequency domain resource; and the resource identifier includes a BWP identifier and a carrier identifier;
where the receiving module is further configured to receive target BWP indication information from the base station;
an obtaining module, configured to obtain a target BWP configuration pair corresponding to the target BWP indication information from an obtained BWP activation configuration table, where the target BWP configuration pair includes a target BWP identifier and a target carrier identifier; the BWP activation configuration table includes a mapping relationship between BWP indication information and BWP configuration pair;
a determining module, configured to, based on the mapping relationship between resource identifier and SBFD frequency domain resource, determine a target SBFD frequency domain resource associated with the target BWP identifier and the target carrier identifier in the target BWP configuration pair.

The present disclosure provides a resource allocation apparatus, which is applied to a base station. The apparatus includes:
an obtaining module, configured to obtain sub-band full duplex (SBFD) resource allocation information;
a sending module, configured to send the SBFD resource allocation information to a user equipment, where the SBFD resource allocation information is configured to indicate SBFD frequency domain resources configured in multiple carriers in a carrier set, or an SBFD frequency domain resource configured in each carrier of multiple carriers; where in the SBFD frequency domain resources configured in multiple carriers in the carrier set, there is at least one set of opposite slots in different carriers of the carrier set; in the SBFD frequency domain resource configured in each carrier of multiple carriers, there is at least one set of opposite slots in the carrier; where the opposite slots include the uplink slot and the downlink slot;
where the sending module is further configured to send SBFD configuration information corresponding to the carrier to the user equipment, where the SBFD configuration information is configured to indicate that the SBFD frequency domain resource in the carrier is valid or invalid.

The present disclosure provides a resource allocation apparatus, which is applied to a user equipment. The apparatus includes:
a receiving module, configured to receive sub-band full duplex (SBFD) resource allocation information from a base station, where the SBFD resource allocation information is configured to indicate SBFD frequency domain resources configured in multiple carriers in a carrier set, or an SBFD frequency domain resource configured in each carrier of the multiple carriers; where in the SBFD frequency domain resources configured in multiple carriers in the carrier set, there is at least one set of opposite slots in different carriers of the carrier set; in the SBFD frequency domain resource configured in each carrier of multiple carriers, there is at least one set of opposite slots in the carrier; where the opposite slots include the uplink slot and the downlink slot;
where the receiving module is further configured to receive SBFD configuration information corresponding to the carrier from the base station, where the SBFD configuration information is configured to indicate that the SBFD frequency domain resource in the carrier is valid or invalid;
a determining module, configured to, based on the SBFD configuration information corresponding to the carrier, determine the SBFD frequency domain resource in the carrier is valid or invalid.

The present disclosure provides a base station, which includes a processor and a machine-readable storage medium, where the machine-readable storage medium stores machine executable instructions executable by the processor; the processor is configured to execute the machine executable instructions to perform the above resource allocation methods.

The present disclosure provides a user equipment, which includes a processor and a machine-readable storage medium, where the machine-readable storage medium stores machine executable instructions executable by the processor; the processor is configured to execute the machine executable instructions to perform the above resource allocation methods.

It can be seen from the above technical solutions, that flexible bandwidth part (BWP) configuration is used in multiple carriers, and flexible sub-band full duplex (SBFD) frequency domain resources (e.g., downlink frequency domain resource and uplink frequency domain resource) are configured for the User Equipment (UE) by using the BWP to support the data transmission of the TDD system. In this way, the resource utilization rate, the network coverage and the network capacity are increased; the uplink transmission resource and the cell coverage scope are increased; the uplink transmission latency is reduced and the uplink transmission capacity is increased.

### BRIEF DESCRIPTION OF DRAWINGS

FIG. 1A is a flowchart illustrating a resource allocation method according to an embodiment of the present disclosure.
FIG. 1B is a flowchart illustrating a resource allocation method according to an embodiment of the present disclosure.
FIG. 2A is a flowchart illustrating a resource allocation method according to an embodiment of the present disclosure.
FIG. 2B is a flowchart illustrating a resource allocation method according to an embodiment of the present disclosure.
FIGS. 3A to 3F are schematic diagrams illustrating BWP frequency domain resource configuration according to an embodiment of the present disclosure.
FIGS. 4A and 4B are schematic diagrams illustrating BWP switching according to an embodiment of the present disclosure.
FIGS. 5A and 5B are schematic diagrams illustrating SBFD frequency domain resource allocation according to an embodiment of the present disclosure.
FIGS. 6A and 6B are structural schematic diagrams illustrating a resource allocation apparatus according to an embodiment of the present disclosure.
FIG. 7A is a structural schematic diagram illustrating a base station according to an embodiment of the present disclosure.
FIG. 7B is a structural schematic diagram illustrating a user equipment according to an embodiment of the present disclosure.

### DETAILED DESCRIPTION

The terms used herein are used to only describe particular examples rather than limit the present disclosure. The singular forms such as "a," "said," and "the" used in the present disclosure and the appended claims are also intended to include multiple, unless the context clearly indicates otherwise. It is also to be understood that the term "and/or" as used herein refers to and includes any or all possible combinations of one or more associated listed items.

It is to be understood that, although the terms "first," "second," "third," and the like may be used in the present disclosure to describe various information, such information should not be limited to these terms. These terms are only used to distinguish one category of information from another. For example, without departing from the scope of the present disclosure, first information may be referred as second information; and similarly, the second information may also be referred as the first information. Depending on the context, the term "if" as used herein may be interpreted as "when" or "upon" or "in response to determining".

Time Division Duplex (TDD) system can work in a Half Duplex (HD) mode, that is, at a same moment, a same frequency domain resource can be used only for UpLink (UL) or a downLink (DL). In order to use the frequency domain resource more flexibly, and increase the resource utilization rate, the TDD system may also work in a Full Duplex (FD) mode, that is, at a same moment, same frequency domain resource can be used for UL and DL at the same time, and in other words, uplink data and downlink data can be processed on the same frequency domain resource at the same time.

In the TDD system, a frame structure can be divided into a DL slot, a UL slot and a flexible slot (F slot). The DL slot includes multiple DL symbols, and the frequency domain resources corresponding to these DL symbols process downlink data. The UL slot includes multiple UL symbols and the frequency domain resources corresponding to these UL symbols process uplink data. The F slot includes at least one F symbol, which can be used for DL or UL or GP.

In the TDD system, once the frame structure is determined, the UE can perform data reception and transmission based on the frame structure. For a UE adopting the HD mode, a base station (e.g., gNB and the like) schedules the UE to perform transmission and reception based on frame structure. For a UE adopting the FD mode, the base station schedules the UE to perform transmission, reception or simultaneous transmission and reception based on frame structure. In conclusion, the base station can configure a frame structure and notify the frame structure to the UE such that the UE obtains the frame structure to perform correct data reception and transmission.

From another aspect, after the UE obtains the frame structure, the UE can also obtain a possible inter-UE interference, and thus use an interference cancellation technology to mitigate the interference and improve communication reliability.

In an example, for a frame structure with the uplink transmission as main, more UL slots are usually configured, which leads to less DL slots. Thus, the downlink transmission rate is limited, and the transmission latency of the downlink data is increased. The latency of the downlink transmission is larger, making it difficult for using the downlink services. For a frame structure with the downlink transmission as main, more DL slots are configured, which leads to less UL slots. Thus, the uplink transmission rate is limited, and the transmission latency of the uplink data is increased. The latency of the uplink transmission is larger, making it difficult for using the uplink services.

The present disclosure provides a resource allocation method, in which flexible BWP configuration is used in multiple carriers, and flexible SBFD frequency domain resources (e.g., downlink sub-band resource and uplink sub-band resource) are configured for the UE in the BWP. For example, an uplink sub-band resource can be configured by using a downlink slot or a flexible slot, and uplink data is transmitted on the uplink sub-band resource. Thus, the uplink data can be transmitted by using the downlink slot or the flexible slot so as to increase the uplink transmission rate and reduce the transmission latency of the uplink data. Furthermore, a downlink sub-band resource can be configured by using an uplink slot or a flexible slot, and downlink data is transmitted on the downlink sub-band resource. Thus, the downlink data can be transmitted by using the uplink slot or the flexible slot so as to increase the downlink transmission rate and reduce the transmission latency of the downlink data.

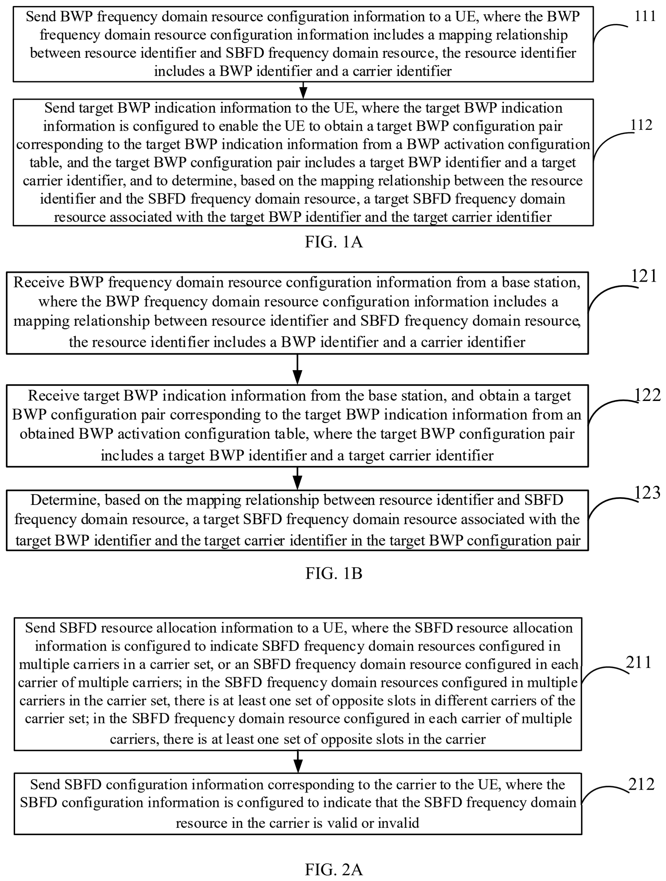

An example of the present disclosure provides a resource allocation method, which is applied to a base station. As shown in FIG. 1A, it shows a flowchart of the resource allocation method. The method includes the following steps.

At step 111, bandwidth part (BWP) frequency domain resource configuration information is sent to a user equipment (UE), where the BWP frequency domain resource configuration information includes a mapping relationship between resource identifier and sub-band full duplex (SBFD) frequency domain resource. The resource identifier includes a BWP identifier and a carrier identifier, that is, the BWP frequency domain resource configuration information may include a mapping relationship between BWP identifier & carrier identifier and SBFD frequency domain resource.

At step 112, target BWP indication information is sent to the UE, where the target BWP indication information is configured to enable the UE to obtain a target BWP configuration pair corresponding to the target BWP indication information from a BWP activation configuration table, and the target BWP configuration pair includes a target BWP identifier and a target carrier identifier, and to determine, based on the mapping relationship between the resource identifier and the SBFD frequency domain resource, a target SBFD frequency domain resource associated with the target BWP identifier and the target carrier identifier; where the BWP activation configuration table includes a mapping relationship between BWP indication information and BWP configuration pair.

An example of the present disclosure provides a resource allocation method, which is applied to a UE. As shown in FIG. 1B, it shows a flowchart of the resource allocation method. The method includes the following steps.

At step 121, bandwidth part (BWP) frequency domain resource configuration information is received from a base station, where the BWP frequency domain resource configuration information includes a mapping relationship between resource identifier and sub-band full duplex (SBFD) frequency domain resource. The resource identifier includes a BWP identifier and a carrier identifier, that is, the BWP frequency domain resource configuration information may include a mapping relationship between BWP identifier & carrier identifier and SBFD frequency domain resource.

At step 122, target BWP indication information is received from the base station, and a target BWP configuration pair corresponding to the target BWP indication information is obtained from an obtained BWP activation configuration table, where the target BWP configuration pair includes a target BWP identifier and a target carrier identifier. The BWP activation configuration table includes a mapping relationship between BWP indication information and BWP configuration pair.

At step 123, based on the mapping relationship between resource identifier and SBFD frequency domain resource, a target SBFD frequency domain resource associated with the target BWP identifier and the target carrier identifier in the target BWP configuration pair is determined.

In an example, for the BWP identifier and the carrier identifier in the BWP frequency domain resource configuration information, the BWP identifier includes an uplink BWP identifier and a downlink BWP identifier, where the uplink BWP identifier and the downlink BWP identifier are same; the carrier identifier includes a first carrier identifier and a second carrier identifier. The uplink BWP identifier corresponds to the first carrier identifier, and the downlink BWP identifier corresponds to the second carrier identifier. In some embodiments, the uplink BWP identifier corresponds to the first carrier identifier, and the uplink BWP identifier and the downlink BWP identifier both correspond to the second carrier identifier. In some embodiments, the downlink BWP identifier corresponds to the first carrier identifier, and the uplink BWP identifier and the downlink BWP identifier both correspond to the second carrier identifier. In some embodiments, the uplink BWP identifier and the downlink BWP identifier both correspond to the first carrier identifier, and the uplink BWP identifier and the downlink BWP identifier both correspond to the second carrier identifier.

In an example, for the BWP identifier and the carrier identifier in the BWP frequency domain resource configuration information, the BWP identifier includes an uplink BWP identifier and a downlink BWP identifier, where the uplink BWP identifier and the downlink BWP identifier are different. The carrier identifier includes a first carrier identifier and a second carrier identifier. The uplink BWP identifier corresponds to the first carrier identifier and the downlink BWP identifier corresponds to the second carrier identifier. In some embodiments, the BWP identifier includes a first uplink BWP identifier, a first downlink BWP identifier, a second uplink BWP identifier, and a second downlink BWP identifier; the first uplink BWP identifier and the first downlink BWP identifier are same, the second uplink BWP identifier and the second downlink BWP identifier are same, the first uplink BWP identifier and the second uplink BWP identifier are different, and the first downlink BWP identifier and the second downlink BWP identifier are different. The carrier identifier includes a first carrier identifier and a second carrier identifier, the first uplink BWP identifier and the first downlink BWP identifier correspond to the first carrier identifier, and the second uplink BWP identifier and the second downlink BWP identifier correspond to the second carrier identifier.

In an example, the SBFD frequency domain resource is a frequency domain resource configured within a carrier indicated by the carrier identifier, and the SBFD frequency domain resource is a frequency domain resource corresponding to the BWP identifier. SBFD frequency domain resource corresponding to the uplink BWP identifier is different from SBFD frequency domain frequency corresponding to the downlink BWP identifier, and the SBFD frequency domain resource corresponding to the uplink BWP identifier is identical to or different from the SBFD frequency domain frequency corresponding to the downlink BWP identifier in size. The carriers indicated by different carrier identifier are carriers of an SBFD intra-subband or carriers of an SBFD inter-subband.

In an example, the base station may also send the BWP activation configuration table to the UE through a Radio Resource Control (RRC) message, and the UE receives the BWP activation configuration table from the base station through a RRC message. Alternatively, the BWP activation configuration table may be pre-configured in the UE, and thus UE can obtain the BWP activation configuration table pre-configured in the UE.

In an example, each BWP configuration pair in the BWP activation configuration table may include a downlink BWP identifier and a carrier identifier corresponding to the downlink BWP identifier, and an uplink BWP identifier and a carrier identifier corresponding to the uplink BWP identifier. The target BWP configuration pair may include a target downlink BWP identifier and a target uplink BWP identifier, where the target downlink BWP identifier and the target uplink BWP identifier are same or different.

Further, the target BWP configuration pair may include a carrier identifier corresponding to the target downlink BWP identifier and a carrier identifier corresponding to the target uplink BWP identifier, where the carrier identifier corresponding to the target downlink BWP identifier and the carrier identifier corresponding to the target uplink BWP identifier may be same or different.

In an example, each BWP configuration pair in the BWP activation configuration table may include a first configuration sub-pair and a second configuration sub-pair. The first configuration sub-pair includes a first downlink BWP identifier and a carrier identifier corresponding to the first downlink BWP identifier, and a first uplink BWP identifier and a carrier identifier corresponding to the first uplink BWP identifier. The second configuration sub-pair includes a second downlink BWP identifier and a carrier identifier corresponding to the second downlink BWP identifier, and a second uplink BWP identifier and a carrier identifier corresponding to the second uplink BWP identifier.

The target BWP configuration pair includes a target first configuration sub-pair and a target second configuration sub-pair.

The target first configuration sub-pair may include a target first downlink BWP identifier and a target first uplink BWP identifier, where the target first downlink BWP identifier and the target first uplink BWP identifier are same or different. The target first configuration sub-pair may include a carrier identifier corresponding to the target first downlink BWP identifier and a carrier identifier corresponding to the target first uplink BWP identifier, where the carrier identifier corresponding to the target first downlink BWP identifier and the carrier identifier corresponding to the target first uplink BWP identifier are same or different.

The target second configuration sub-pair may include a target second downlink BWP identifier and a target second uplink BWP identifier, where the target second downlink BWP identifier and the target second uplink BWP identifier are same or different. The target second configuration sub-pair may include a carrier identifier corresponding to the target second downlink BWP identifier and a carrier identifier corresponding to the target second uplink BWP identifier, where the carrier identifier corresponding to the target second downlink BWP identifier and the carrier identifier corresponding to the target second uplink BWP identifier are same or different.

In an example, the base station may send a BWP activation configuration to the UE through a Downlink Control Information (DCI) message, and the UE receives the BWP activation configuration from the base station through the DCI message. In some embodiments, the base station may send a BWP activation configuration to the UE through a Medium Access Control - Control Element (MAC-CE) message, and the UE receives the BWP activation configuration from the base station through the MAC-CE message. In some embodiments, the base station may send a BWP activation configuration to the UE through RRC message, and the UE receives the BWP activation configuration from the base station through the RRC message. Of course, the above examples are only illustrative and no limitation is made herein.

The BWP activation configuration may include the target BWP indication information and a switching flag. If the switching flag is a first value, the UE obtains the target BWP configuration pair corresponding to the target BWP indication information from the BWP activation configuration table; if the switching flag is not the first value, the UE is prohibited to obtain the target BWP configuration pair corresponding to the target BWP indication information from the BWP activation configuration table.

In some embodiments, the BWP activation configuration may include the target BWP indication information. If the target BWP indication information is a target value, the UE is prohibited to obtain the target BWP configuration pair corresponding to the target BWP indication information from the BWP activation configuration table; if the target BWP indication information is not the target value, the UE obtains the target BWP configuration pair corresponding to the target BWP indication information from the BWP activation configuration table.

In an example, within a BWP switching time, if the SBFD frequency domain resource used by the UE changes, the base station may also obtain updated target BWP indication information, where the updated target BWP indication information corresponds to a changed SBFD frequency domain resource. The base station may send the updated target BWP indication information to the UE, and the UE receives the updated target BWP indication information. The UE may obtain the target BWP configuration pair corresponding to the updated target BWP indication information from the BWP activation configuration table.

The base station may send the updated BWP activation configuration to the UE through DCI message, MAC-CE message or RRC message. In this case, the UE may receive the updated BWP activation configuration, where the updated BWP activation configuration may include the updated target BWP indication information.

It can be seen from the above technical solutions, that flexible BWP configuration is used in multiple carriers, and flexible SBFD frequency domain resources (e.g., downlink frequency domain resource and uplink frequency domain resource) are configured for the UE by using the BWP to support the data transmission of the TDD system. In this way, the resource utilization rate, the network coverage and the network capacity are increased; the uplink transmission resource and the cell coverage scope are increased; the uplink transmission latency is reduced and the uplink transmission capacity is increased.

An example of the present disclosure provides a resource allocation method, which is applied to a base station. As shown in FIG. 2A, it shows a flowchart of the resource allocation method. The method may include the following steps.

At step 211, SBFD resource allocation information is sent to a UE, where the SBFD resource allocation information is configured to indicate SBFD frequency domain resources configured in multiple carriers in a carrier set, or an SBFD frequency domain resource configured in each carrier of multiple carriers. In the SBFD frequency domain resources configured in multiple carriers in the carrier set, there is at least one set of opposite slots in different carriers of the carrier set. In the SBFD frequency domain resource configured in each carrier of multiple carriers, there is at least one set of opposite slots in the carrier. The opposite slots include the uplink slot and the downlink slot, that is, one is an uplink slot and the other is a downlink slot.

At step 212, SBFD configuration information corresponding to the carrier is sent to the UE, where the SBFD configuration information is configured to indicate that the SBFD frequency domain resource in the carrier is valid or invalid.

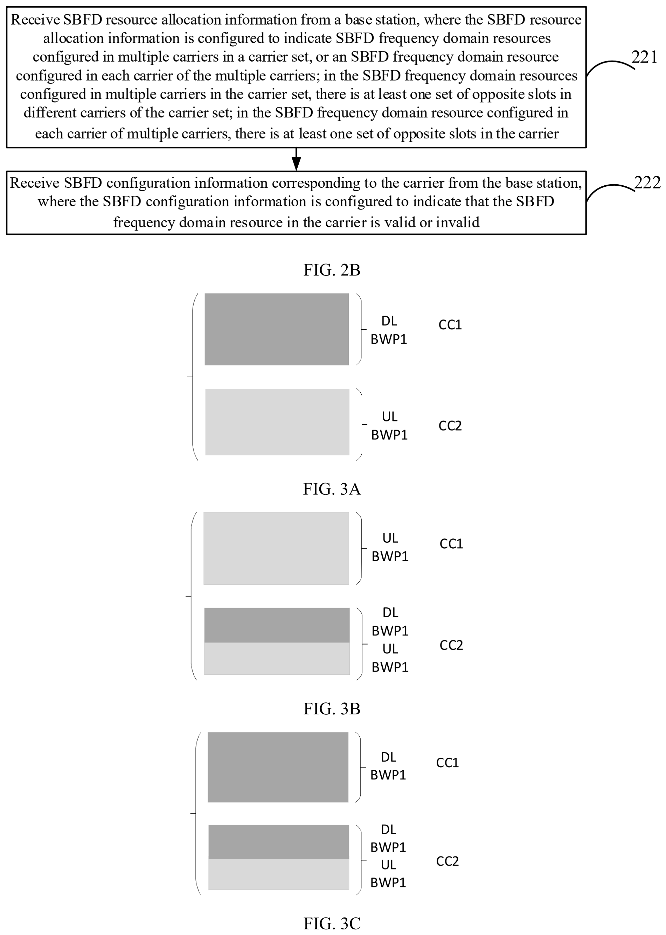

An example of the present disclosure provides a resource allocation method, which is applied to a UE. As shown in FIG. 2B, it is a flowchart illustrating the resource allocation method. The method may include the following steps.

At step 221, SBFD resource allocation information is received from a base station, where the SBFD resource allocation information is configured to indicate SBFD frequency domain resources configured in multiple carriers in a carrier set, or an SBFD frequency domain resource configured in each carrier of the multiple carriers. In the SBFD frequency domain resources configured in multiple carriers in the carrier set, there is at least one set of opposite slots in different carriers of the carrier set. In the SBFD frequency domain resource configured in each carrier of multiple carriers, there is at least one set of opposite slots in the carrier.

At step 222, SBFD configuration information corresponding to the carrier is received from the base station, where the SBFD configuration information is configured to indicate that the SBFD frequency domain resource in the carrier is valid or invalid.

In an example, the SBFD resource allocation information is configured to indicate the SBFD frequency domain resources configured in multiple carriers in the carrier set, which may include but not limited to the followings: the SBFD resource allocation information may include a first allocation indication and a second allocation indication; for each carrier of the multiple carriers, the first allocation indication is configured to configure all slots included in the carrier as flexible slots, and the second allocation indication is configured to indicate each flexible slot is used for an uplink slot or a downlink slot; or,
the SBFD resource allocation information includes a third allocation indication; for each carrier of the multiple carriers, the third allocation indication is configured to configure each slot included in the carrier as an uplink slot or a downlink slot; or,
the SBFD resource allocation information includes a fourth allocation indication and a fifth allocation indication; for a first carrier in the multiple carriers, the fourth allocation indication is configured to configure each slot included in the first carrier as an uplink slot or a downlink slot; for a second carrier other than the first carrier (the second carrier may be one or more carriers), the fifth allocation indication is configured to indicate an offset between the second carrier and the first carrier, where the offset may be a slot offset and/or symbol offset.

In an example, the fifth allocation indication is further used to indicate whether the offset between the second carrier and the first carrier is valid, for example, indicate that the offset is valid or the offset is invalid.

In an example, when the base station sends the SBFD configuration information corresponding to the carrier to the UE, and the UE receives the SBFD configuration information corresponding to the carrier from the base station, for a third carrier in the multiple carriers, if the SBFD configuration information includes a deactivation indication of the third carrier, the deactivation indication is configured to perform deactivation on the third carrier, and the deactivation indication is configured to indicate that the SBFD frequency domain resource in the third carrier is invalid.

Alternatively, for the third carrier in the multiple carriers, if the SBFD configuration information includes an invalidation indication of the SBFD frequency domain resource in the third carrier, the invalidation indication is configured to indicate that the SBFD frequency domain resource in the third carrier is invalid. In this case, the third carrier is still in an activation state, i.e., is not deactivated. Since the SBFD frequency domain resource in the third carrier is invalid, the configuration in the third carrier may be a default configuration (e.g., use a default frame structure of DL slot and UL slot), or the configuration in the third carrier may be the same as the configuration on a primary carrier, that is, use the frame structure of DL slot and UL slot of the primary carrier.

In an example, when the base station sends the SBFD configuration information corresponding to the carrier to the UE, and the UE receives the SBFD configuration information corresponding to the carrier from the base station, for a fourth carrier in the multiple carriers, if the SBFD configuration information includes an activation indication and a validation indication of the fourth carrier, the activation indication is configured to perform activation on the fourth carrier, and the validation indication is configured to indicate that the SBFD frequency domain resource in the fourth carrier is valid or invalid.

Alternatively, for the fourth carrier in the multiple carriers, if the SBFD configuration information includes an activation indication of the fourth carrier, the activation indication is configured to perform activation on the fourth carrier. After the fourth carrier is activated, the SBFD frequency domain resource in the fourth carrier is directly valid , that is, after the base station sends the SBFD resource allocation information to the UE, if the carrier corresponding to the SBFD resource allocation information is activated, the SBFD frequency domain resource in the carrier is directly valid .

It can be seen from the above technical solutions, that flexible BWP configuration is used in multiple carriers, and flexible SBFD frequency domain resources (e.g., downlink frequency domain resource and uplink frequency domain resource) are configured for the UE by using the BWP to support the data transmission of the TDD system. In this way, the resource utilization rate, the network coverage and the network capacity are increased; the uplink transmission resource and the cell coverage scope are increased; the uplink transmission latency is reduced and the uplink transmission capacity is increased.

The above technical solutions of the present disclosure will be described below in combination with specific examples.

The frame structure of the TDD may be completed by semi-static configuration plus dynamic indication. In a high-level signaling, multiple Slot Format Combinations (SFCs) may be defined by using Slot Format Indicator (SFI). For example, the base station may select slot formats satisfying a service requirement, and add these slot formats to the SFCs. Some slot formats are showed in the Table 1, where D represents DL symbol, U represents UL symbol, and F represents flexible symbol. Each SFC is indicated by a fixed ID and includes one or more slot format types.

**Table 1**

| Slot format index | Symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| ... | ... | | | | | | | | | | | | | |
| 55 | D | D | F | F | F | U | U | U | D | D | D | D | D | D |
| 56 - 254 | Reserved | | | | | | | | | | | | | |
| 255 | The UE determines the slot format based on tdd-UL-DL-Configuration Common, tdd-UL-DL-ConfigurationDedicated and DCI format. | | | | | | | | | | | | | |

After SFI configuration is completed, the base station sends multiple slot format combinations to the UE through an RRC message. After the multiple slot format combinations are configured by the RRC signaling, the base station may notify the currently-used SFC index to the UE in the DCI format 2_0 through periodic PDCCH (Physical Downlink Control Channel). After the UE receives the information of the DCI format 2_0 correctly, the UE may, based on the value of the SFC index, determine a slot format of each slot in a particular period. Thus, the base station and the UE complete frame structure configuration by dynamic indication, and can perform uplink and downlink data transmission.

The resource allocation may be divided into a time domain resource allocation and a frequency domain resource allocation (with resource allocation of a downlink channel as an example). For the time domain resource allocation, the time domain resource allocation field in the DCI indicates a time domain position of the downlink channel, and has a total of 4 bits, and is valued between 0 and 15. If the value is m, the m+1 indicates a row index of the time domain resource allocation table, and the information in this row indicates a time domain resource of PDSCH (Physical Downlink Shared Channel). There are two indication manners: one is to indicate three pieces of information: a slot offset between PDSCH and PDCCH scheduling the PDSCH, a start symbol of the PDSCH in the slot, and the number of consecutive symbols in the PDSCH; the other is to indicate a slot offset between the PDSCH and the PDCCH scheduling the PDSCH, one SLIV (symbol length indicator value), a start symbol of the PDSCH calculated by the user equipment based on the SLIV and the number of consecutive symbols.

For frequency domain resource allocation, the frequency domain resource allocation field in the DCI indicates a frequency domain resource allocation of the downlink channel, and the PDSCH frequency domain resource allocation includes Type 0 and Type 1. Type 0 supports non-continuous resource allocation to obtain a frequency diversity gain; Type 1 supports continuous resource allocation and can reduce the number of bits required by this field. The DCI format 1_0 only supports Type 1.

Type 0: for the non-continuous resource allocation type, one RBG (resource block group) is one VRB (virtual resource block) group, which is formed by P continuous VRBs and the number thereof is determined by the high-level parameter rbg-Size and the BWP bandwidth. Under the resource allocation of Type 0, the frequency domain resource allocation is used as one bitmap to indicate which RBGs are allocated to the downlink channel, where each bit in the bitmap represents one RBG with the highest bit corresponding to the RBG0. By analogy, bit being 1 represents that the RGB is allocated to the downlink channel and bit being 0 represents that it is not a downlink channel resource.

Type 1: the frequency domain resource indication field is not used as a bitmap but indicates one Resource Indicator Value (RIV). The UE calculates the starting RB (resource block) and the number of occupied RBs through the RIV.

Under the TDD system, the frame structure is divided into a UL slot, a DL slot or a flexible slot (F slot) according to slot. The symbol in the flexible slot may be configured as a UL symbol, a DL symbol or an F symbol. The F symbol may be used for UL, DL or GP. The uplink data can be transmitted in the UL slot or in the UL symbol or F symbol of the flexible slot. The uplink data cannot be transmitted in the DL slot nor in the DL symbol in the flexible slot. The downlink data can be transmitted in the DL slot and in the DL symbol or F symbol in the flexible slot. The downlink data cannot be transmitted in the UL slot nor in the UL symbol in the flexible slot.

Full Duplex communication is achieved by SBFD, that is, an SBFD sub-band resource (i.e., frequency domain resource) is configured in the BWP. The SBFD sub-band resource includes an uplink sub-band resource and a downlink sub-band resource. At a same moment, data of different directions can be transmitted by using the SBFD sub-band resource. For example, an SBFD sub-band resource is configured in the BWP of the DL slot, and the uplink data is transmitted by using the SBFD sub-band resource to enable the uplink data to be transmitted in the DL slot. An SBFD sub-band resource is configured in the BWP of the DL symbol of the flexible slot, and the uplink data is transmitted by using the SBFD sub-band resource to enable the uplink data to be transmitted in the DL symbol of the flexible slot.

An SBFD sub-band resource is configured in the BWP of the UL slot, and the downlink data is transmitted by using the SBFD sub-band resource to enable the downlink data to be transmitted in the UL slot. An SBFD sub-band resource is configured in the BWP of the UL symbol of the flexible slot, and the downlink data is transmitted by using the SBFD sub-band resource to enable the downlink data to be transmitted in the UL symbol of the flexible slot.

In an example, the SBFD sub-band resource may be a frequency domain resource in the SBFD slot or SBFD symbol. The SBFD symbol may be a symbol configured with an SBFD sub-band. On these SBFD sub-bands of the SBFD symbols, the base station and the UE may perform fully duplex communication, that is, on the SBFD sub-band resource, the uplink transmission, the downlink transmission or simultaneous uplink and downlink transmissions can be performed.

The SBFD sub-band resource may be clearly indicated as uplink, downlink or flexible. When the SBFD sub-band resource is indicated as flexible, uplink or a downlink may be flexibly scheduled within the SBFD sub-band resource. If the SBFD sub-band resource is not clearly indicated, it means flexible which can be used to transmit uplink or a downlink data. The configuration of the SBFD symbol may include: which symbols of the DL slot, the UL slot and the F slot are used for SBFD transmission, and its implementation period and start point and the like.

The SBFD sub-band resource indicated as uplink is called uplink sub-band resource (UL SB for short), that is, the SBFD sub-band resource is used for uplink. The SBFD sub-band resource indicated as downlink is called downlink sub-band resource (DL SB for short), that is, the SBFD sub-band resource is used f or a downlink. The frequency domain resource indicated as guard sub-band is called guard sub-band resource (GB for short) which is used for the guard sub-band.

For the half-duplex UE supporting SBFD function, the UE may obtain the configuration relating to the SBFD sub-band resource. However, the UE can only receive DL data or send UL data at a same moment regardless of a same carrier or different carriers. For the full-duplex UE supporting SBFD function, UE may obtain the configuration relating to the SBFD sub-band resource, and further, the UE can receive DL data and send UL data at a same moment regardless of same carrier or different carriers.

The base station configures an SBFD sub-band resource for the half-duplex UE or full-duplex UE supporting the SBFD function. In the DL slot or DL symbol, an SBFD sub-band resource may be configured for the UE, and the SBFD sub-band resource is used for UL data transmission, that is, the SBFD sub-band resource may be an uplink sub-band resource. The DL symbol configured with the SBFD sub-band resource is an SBFD symbol, and the SBFD symbol includes a downlink sub-band resource and a guard sub-band resource except the uplink sub-band resource, where the guard sub-band resource is between the uplink sub-band resource and the downlink sub-band resource.

In the UL slot or UL symbol, an SBFD sub-band resource may be configured for the UE, and the SBFD sub-band resource is used for DL data transmission, that is, the SBFD sub-band resource may be a downlink sub-band resource. The UL symbol configured with the SBFD sub-band resource is an SBFD symbol, and the SBFD symbol includes an uplink sub-band resource and a guard sub-band resource except the downlink sub-band resource, where the guard sub-band resource is between the uplink sub-band resource and the downlink sub-band resource.

In the F slot or F symbol, an SBFD sub-band resource may be configured for the UE, and the SBFD sub-band resource is used for DL data transmission (or UL data transmission), that is, the SBFD sub-band resource may be a downlink sub-band resource (or uplink sub-band resource). The F symbol configured with the SBFD sub-band resource is an SBFD symbol, and the SBFD symbol includes an uplink sub-band resource ( or a downlink sub-band resource) and a guard sub-band resource except the downlink sub-band resource (or uplink sub-band resource), where the guard sub-band resource is between the uplink sub-band resource and the downlink sub-band resource.

In an example, the base station in the subsequent examples is a full-duplex base station capable of processing the DL data and the UL data at the same time. In the subsequent examples, the UE is a half-duplex UE or full-duplex UE supporting SBFD function. Regardless of same carrier or different carriers, the half-duplex UE can only process the DL data or the UL data at a same moment, and can obtain the configuration parameters of all SBFDs. Regardless of same carrier or different carriers, the full-duplex UE can process the DL data and the UL data at a same moment, and can obtain the configuration parameters of all SBFDs.

In order to support FD (full-duplex) communication, the SBFD sub-band resource may be configured semi-statically, for example, configured semi-statically through RRC signaling, or configured dynamically, for example, configured dynamically through DCI.

Under the TDD FD mode, in an example, there is provided a resource allocation method under multiple carriers, which involves resource allocation of full-duplex uplink and downlink physical channels of the TDD in case of multiple carriers. This method is mainly used to address the problems of how the resource is allocated, scheduled and activated under multiple carriers. The resource allocation method is described below.

First, BWP frequency domain resource configuration, namely, SBFD resource allocated based on BWP.

The base station sends BWP frequency domain resource configuration information to the UE, and the UE receives the BWP frequency domain resource configuration information from the base station. The BWP frequency domain resource configuration information includes a mapping relationship between resource identifier and SBFD frequency domain resource (frequency resource), where the resource identifier may include a BWP identifier and a carrier identifier.

In an example, for the TDD system, under multiple carriers, when the base station configures a BWP for the UE, same downlink BWP identifier and uplink BWP identifier can be configured in different carriers. The frequency resources corresponding to the same downlink BWP identifier and uplink BWP identifier may be different, that is, the SBFD frequency domain resource corresponding to the uplink BWP identifier and the SBFD frequency domain resource corresponding to the downlink BWP identifier are different.

In an example, the SBFD frequency domain resource corresponding to the uplink BWP identifier is identical to or different from the SBFD frequency domain frequency corresponding to the downlink BWP identifier in size.

In an example, the SBFD frequency domain resource is a frequency domain resource configured within a carrier indicated by the carrier identifier, and the SBFD frequency domain resource is a frequency domain resource corresponding to the BWP identifier. The carriers indicated by different carrier identifiers are carriers of an SBFD intra-subband (Intra-band CA) or carriers of an SBFD inter-subband (Inter-band CA).

For example, during BWP configuration for the UE, the base station may configure the uplink BWP identifier and the downlink BWP identifier. The uplink BWP identifier and the downlink BWP identifier may be same. Furthermore, the uplink BWP identifier corresponds to the first carrier identifier and the downlink BWP identifier corresponds to the second carrier identifier. Based on the above, the BWP frequency domain resource configuration information includes a mapping relationship between uplink BWP identifier & first carrier identifier and SBFD frequency domain resource, and a mapping relationship between downlink BWP identifier & second carrier identifier and SBFD frequency domain resource.

As shown in FIG. 3A, it is a schematic diagram illustrating an asymmetrical resource allocation of DL BWP and UL BWP under multiple carriers. Each carrier has one BWP, the uplink BWP identifier and the downlink BWP identifier both are BWP1, where the uplink BWP identifier is UL BWP1 and the downlink BWP identifier is DL BWP1. The same downlink BWP identifier and uplink BWP identifier form one BWP group. The second carrier identifier corresponding to the DL BWP1 is CC1, and the downlink BWP is in the CC1. The first carrier identifier corresponding to the UL BWP1 is CC2, and the uplink BWP is in CC2.

The frequency resource corresponding to the DL BWP1 may different from the frequency resource corresponding to the UL BWP1. For example, the base station configures an SBFD frequency domain resource for the DL BWP1 in the CC1, and the SBFD frequency domain resource is from the 0th PRB to the 100th RPB. The base station configures an SBFD frequency domain resource for the UL BWP1 in the CC2, and the SBFD frequency domain resource is from the Oth PRB to the 100th RPB. Apparently, since the base station configures the SBFD frequency domain resources in different CCs, the frequency resources are not same.

For example, during BWP configuration for the UE, the base station may configure the uplink BWP identifier and the downlink BWP identifier, where the uplink BWP identifier and the downlink BWP identifier may be same. The uplink BWP identifier corresponds to the first carrier identifier, and the uplink BWP identifier and the downlink BWP identifier both correspond to the second carrier identifier. Based on the above, the BWP frequency domain resource configuration information includes a mapping relationship between uplink BWP identifier & first carrier identifier and SBFD frequency domain resource, a mapping relationship between uplink BWP identifier & second carrier identifier and SBFD frequency domain resource, and a mapping relationship between downlink BWP identifier & second carrier identifier and SBFD frequency domain resource.

As shown in FIG. 3B, it shows a schematic diagram illustrating an asymmetric resource allocation of DL BWP and UL BWP under multiple carriers, where the resource of the DL BWP is smaller than the resource of the UL BWP. The uplink BWP identifier and the downlink BWP identifier both are BWP1, where the uplink BWP identifier is UL BWP1 and the downlink BWP identifier is DL BWP1. The same downlink BWP identifier and uplink BWP identifier form one BWP group. The second carrier identifier corresponding to the DL BWP1 is CC2, and the downlink BWP is in the CC2. The first carrier identifier corresponding to the UL BWP1 is CC1, and the second carrier identifier corresponding to the UL BWP1 is CC2, that is, the uplink BWP is in the CC1 and CC2.

The frequency resource corresponding to the DL BWP1 may be different from the frequency resource corresponding to the UL BWP1, and the frequency resource corresponding to the DL BWP1 may be different in size from the frequency resource corresponding to the UL BWP1, for example, the frequency resources may be partially overlapped or not overlapped. For example, the base station allocates an SBFD frequency domain resource to the UL BWP1 in the CC1, and the SBFD frequency domain resource is from the 0th PRB to the 100th PRB. The base station allocates an SBFD frequency domain resource to the UL BWP1 in the CC2, and the SBFD frequency domain resource is from the Oth PRB to the 50th PRB. The base station allocates an SBFD frequency domain resource to the DL BWP1 in the CC2, and the SBFD frequency domain resource is from the 51st PRB to the 100th PRB.

For example, during BWP configuration for the UE, the base station configures the uplink BWP identifier and the downlink BWP identifier. The uplink BWP identifier and the downlink BWP identifier may be same. The downlink BWP identifier corresponds to the first carrier identifier, and the uplink BWP identifier and the downlink BWP identifier both correspond to the second carrier identifier. Based on the above, the BWP frequency domain resource configuration information includes a mapping relationship between downlink BWP identifier & first carrier identifier and SBFD frequency domain resource, a mapping relationship between downlink BWP identifier & second carrier identifier and SBFD frequency domain resource, and a mapping relationship between uplink BWP identifier & second carrier identifier and SBFD frequency domain resource.

As shown in FIG. 3C, it shows a schematic diagram illustrating an asymmetric resource allocation of DL BWP and UL BWP under multiple carriers, where the resourced of the DL BWP is larger than the resource of the UL BWP. The uplink BWP identifier and the downlink BWP identifier both are BWP1, where the uplink BWP identifier is UL BWP1 and the downlink BWP is DL BWP1. The same downlink BWP identifier and uplink BWP identifier form one BWP group. The first carrier identifier corresponding to the DL BWP1 is CC1, and the second carrier identifier corresponding to the DL BWP1 is CC2, that is, the downlink BWP is in the CC1 and CC2. The second carrier identifier corresponding to the UL BWP1 is CC2, that is, the uplink BWP is in the CC2.

The frequency resource corresponding to the DL BWP1 may be different from the frequency resource corresponding to the UL BWP1, and the frequency resource corresponding to the DL BWP1 may be different in size from the frequency resource corresponding to the UL BWP1, for example, the frequency resources may be partially overlapped or not overlapped. For example, the base station allocates an SBFD frequency domain resource to the DL BWP1 in the CC1, and the SBFD frequency domain resource is from the 0th PRB to the 100th PRB. The base station allocates an SBFD frequency domain resource to the UL BWP1 in the CC2, and the SBFD frequency domain resource is from the 0th PRB to the 50th PRB. The base station allocates an SBFD frequency domain resource to the DL BWP1 in the CC2, and the SBFD frequency domain resource is from the 51st PRB to the 100th PRB.

For example, during BWP configuration for the UE, the base station configures the uplink BWP identifier and the downlink BWP identifier. The uplink BWP identifier and the downlink BWP identifier may be same. The uplink BWP identifier and the downlink BWP identifier both correspond to the first carrier identifier, and the uplink BWP identifier and the downlink BWP identifier both correspond to the second carrier identifier. Based on the above, the BWP frequency domain resource configuration information includes a mapping relationship between downlink BWP identifier & first carrier identifier and SBFD frequency domain resource, a mapping relationship between downlink BWP identifier & second carrier identifier and SBFD frequency domain resource, a mapping relationship between uplink BWP identifier & first carrier identifier and SBFD frequency domain resource, and a mapping relationship between uplink BWP identifier & second carrier identifier and SBFD frequency domain resource.

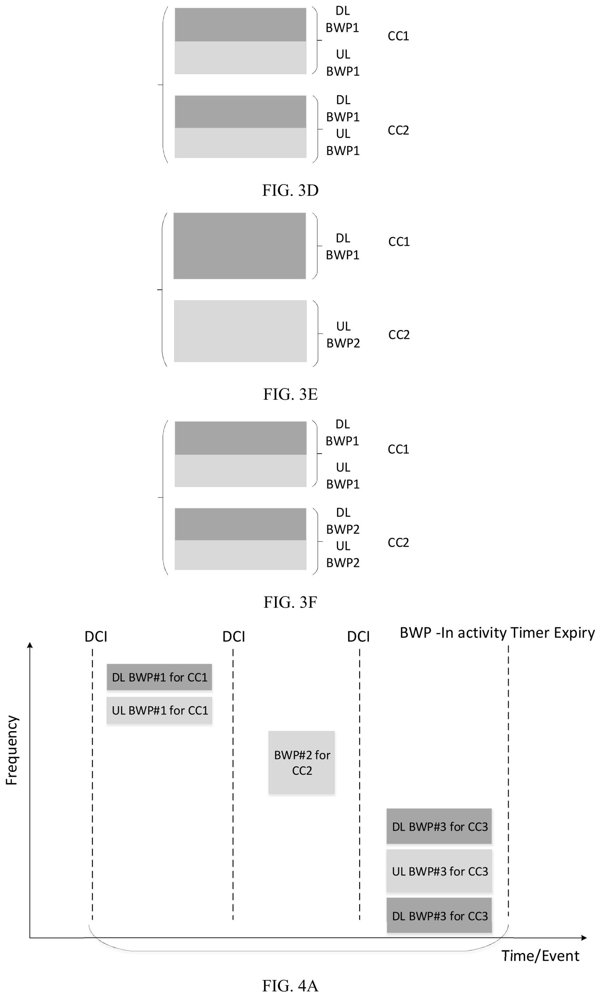

As shown in FIG. 3D, it shows a schematic diagram illustrating an asymmetric resource allocation of DL BWP and UL BWP under multiple carriers, where the SBFD configurations of two carriers are same, and the resources of the two carriers are a same BWP. The uplink BWP identifier and the downlink BWP identifier both are BWP1, where the uplink BWP identifier is UL BWP1, and the downlink BWP identifier is DL BWP1. The downlink BWP identifier and the uplink BWP identifier form one BWP group. The first carrier identifier corresponding to the DL BWP1 and the UL BWP1 is CC1, and the second carrier identifier corresponding to the DL BWP1 and the UL BWP1 is CC2, that is, the downlink BWP is in the CC1 and CC2, and the uplink BWP is in the CC1 and CC2.

The base station allocates an SBFD frequency domain resource to the UL BWP1 in the CC1, and the SBFD frequency domain resource is from the 0th PRB to the 50th PRB. The base station allocates an SBFD frequency domain resource to the DL BWP1 in the CC1, and the SBFD frequency domain resource is from the 51st PRB to the 100th PRB.

The base station allocates an SBFD frequency domain resource to the UL BWP1 in the CC2, and the SBFD frequency domain resource is from the 0th PRB to the 50th PRB. The base station allocates an SBFD frequency domain resource to the DL BWP1 in the CC2, and the SBFD frequency domain resource is from the 51st PRB to the 100th PRB.

For example, during BWP configuration for the UE, the base station configures the uplink BWP identifier and the downlink BWP identifier. The uplink BWP identifier and the downlink BWP identifier may be different. The uplink BWP identifier corresponds to the first carrier identifier, and the downlink BWP identifier corresponds to the second carrier identifier. Based on the above, the BWP frequency domain resource configuration information includes a mapping relationship between uplink BWP identifier & first carrier identifier and SBFD frequency domain resource, and a mapping relationship between downlink BWP identifier & second carrier identifier and SBFD frequency domain resource.

As shown in FIG. 3E, it shows a schematic diagram illustrating an asymmetric resource allocation of DL BWP and UL BWP under multiple carriers. The uplink BWP identifier and the downlink BWP identifier may be different. The uplink BWP identifier is UL BWP2 and the downlink BWP identifier is DL BWP1. The second carrier identifier corresponding to the DL BWP1 is CC1, and the downlink BWP is in the CC1. The first carrier identifier corresponding to the UL BWP2 is CC2, and the uplink BWP is in the CC2.

The base station allocates an SBFD frequency domain resource to the DL BWP1 in the CC1, and the SBFD frequency domain resource is from the 0th PRB to the 100th PRB. The base station allocates an SBFD frequency domain resource to the UL BWP2 in the CC2, and the SBFD frequency domain resource is from the 0th PRB to the 100th PRB.

For example, during BWP configuration for the UE, the base station may configure a first uplink BWP identifier, a first downlink BWP identifier, a second uplink BWP identifier, and a second downlink BWP identifier, where the first uplink BWP identifier and the first downlink BWP identifier are same, the second uplink BWP identifier and the second downlink BWP identifier are same, the first uplink BWP identifier and the second uplink BWP identifier are different, and the first downlink BWP identifier and the second downlink BWP identifier are different. The first uplink BWP identifier and the first downlink BWP identifier correspond to the first carrier identifier, and the second uplink BWP identifier and the second downlink BWP identifier correspond to the second carrier identifier.

Based on the above, the BWP frequency domain resource configuration information includes a mapping relationship between first downlink BWP identifier & first carrier identifier and SBFD frequency domain resource, a mapping relationship between first uplink BWP identifier & first carrier identifier and SBFD frequency domain resource, a mapping relationship between second downlink BWP identifier & second carrier identifier and SBFD frequency domain resource, and a mapping relationship between second uplink BWP identifier & second carrier identifier and SBFD frequency domain resource.

As shown in FIG. 3F, it shows a schematic diagram illustrating an asymmetric resource allocation of DL BWP and UL BWP under multiple carriers, where the SBFD configurations of two carriers are same, and the resources of the two carriers are different BWPs. The uplink BWP identifier includes a UL BWP1 and a UL BWP2, and the downlink BWP identifier includes a DL BWP1 and a DL BWP2.

The UL BWP1 and the DL BWP1 form one BWP group, and the UL BWP2 and the DL BWP2 form another BWP group. The first carrier identifier corresponding to the DL BWP1 and the UL BWP1 is CC1, and the second carrier identifier corresponding to the DL BWP2 and the UL BWP2 is CC2, that is, the DL BWP1 is in the CC1, the DL BWP2 is in the CCCC2, the UL BWP1 is in the CC1 and the UL BWP2 is in the CCCC2.

The base station allocates an SBFD frequency domain resource to the UL BWP1 in the CC1, and the SBFD frequency domain resource is from the 0 PRB to the 50th PRB. The base station allocates an SBFD frequency domain resource to the DL BWP1 in the CC1 and the SBFD frequency domain resource is from the 51st PRB to the 100th PRB.

The base station allocates an SBFD frequency domain resource to the UL BWP2 in the CC2, and the SBFD frequency domain resource is from the 0 PRB to the 50th PRB. The base station allocates an SBFD frequency domain resource to the DL BWP2 in the CC2, and the SBFD frequency domain resource is from the 51st PRB to the 100th PRB.

In an example, after the base station configuring the BWP frequency domain resource for the UE, the base station may send the BWP frequency domain resource configuration information to the UE. The BWP frequency domain resource configuration information includes a mapping relationship between a BWP identifier (e.g., downlink BWP identifier and uplink BWP identifier) & a carrier identifier and SBFD frequency domain resource.

Second, the BWP activation configuration table. The base station and the UE may pre-configure a same BWP activation configuration table, for example, a BWP activation configuration table is pre-configured in the base station and the UE. Alternatively, the base station may obtain a BWP activation configuration table and send the BWP activation configuration table to the UE through an RRC message, for example, the base station broadcasts a BWP activation configuration table to a plurality of UEs through an RRC message.

In an example, the BWP activation configuration table (also called BWP matching pair activation indication table) may include a mapping relationship between BWP indication information and BWP configuration pair. For each BWP configuration pair in the BWP activation configuration table, the BWP configuration pair may include a downlink BWP identifier and a carrier identifier corresponding to the downlink BWP identifier, and an uplink BWP identifier and a carrier identifier corresponding to the uplink BWP identifier. The downlink BWP identifier and the uplink BWP identifier may be same or different. The carrier identifier corresponding to the downlink BWP identifier and the carrier identifier corresponding to the uplink BWP identifier may be same or different.

As shown in Table 2, it is an example of the BWP activation configuration table. In the BWP activation configuration table, 16 BWP configuration pairs are given and indicated by the BWP indication information of four bits.

**Table 2**

| BWP indication information | BWP configuration pair | |
|---|---|---|
| 0000 | | downlink BWP identifier 1 andCC1, uplink BWP identifier 1 and CC1 |
| 0001 | | downlink BWP identifier 1 and CC1, uplink BWP identifier 2 and CC2 |
| 0010 | | downlink BWP identifier 1 and CC1, uplink BWP identifier 3 and CC3 |
| 0011 | | downlink BWP identifier 1 and CC1, uplink BWP identifier 4 and CC4 |
| 0100 | | downlink BWP identifier 2 and CC2, uplink BWP identifier 1 and CC1 |
| 0101 | | downlink BWP identifier 2 and CC2, uplink BWP identifier 2 and CC2 |
| 0110 | | downlink BWP identifier 2 and CC2, uplink BWP identifier 3 and CC3 |
| 0111 | | downlink BWP identifier 2 and CC2, uplink BWP identifier 4 and CC4 |
| 1000 | | downlink BWP identifier 3 and CC3, uplink BWP identifier 1 and CC1 |
| 1001 | | downlink BWP identifier 3 and CC3, uplink BWP identifier 2 and CC2 |
| 1010 | | downlink BWP identifier 3 and CC3, uplink BWP identifier 3 and CC3 |
| 1011 | | downlink BWP identifier 3 and CC3, uplink BWP identifier 4 and CC4 |
| 1100 | | downlink BWP identifier 4 and CC4, uplink BWP identifier 1 and CC1 |
| 1101 | | downlink BWP identifier 4 and CC4, uplink BWP identifier 2 and CC2 |
| 1110 | | downlink BWP identifier 4 and CC4, uplink BWP identifier 3 and CC3 |
| 1111 | | downlink BWP identifier 4 and CC4, uplink BWP identifier 4 and CC4 |

It can be seen from Table 2 that the BWP indication information is indicated by four bits, and each piece of BWP indication information corresponds to one BWP configuration pair. The BWP configuration pair is configured to indicate a downlink BWP identifier and a carrier identifier corresponding to the downlink BWP identifier, and an uplink BWP identifier and a carrier identifier corresponding to the uplink BWP identifier.

In an example, the BWP activation configuration table (also called BWP matching pair activation indication table) may include a mapping relationship between BWP indication information and BWP configuration pair. For each BWP configuration pair in the BWP activation configuration table, the BWP configuration pair may a first configuration sub-pair and a second configuration sub-pair.

The first configuration sub-pair includes a first downlink BWP identifier and a carrier identifier corresponding to the first downlink BWP identifier, and a first uplink BWP identifier and a carrier identifier corresponding to the first uplink BWP identifier. The first downlink BWP identifier and the first uplink BWP identifier may be same or different. The carrier identifier corresponding to the first downlink BWP identifier and the carrier identifier corresponding to the first uplink BWP identifier may be same or different.

The second configuration sub-pair includes a second downlink BWP identifier and a carrier identifier corresponding to the second downlink BWP identifier, and a second uplink BWP identifier and a carrier identifier corresponding to the second uplink BWP identifier. The second downlink BWP identifier and the second uplink BWP identifier may be same or different. The carrier identifier corresponding to the second downlink BWP identifier and the carrier identifier corresponding to the second uplink BWP identifier may be same or different.

As shown in FIG. 3, it is an example of the BWP activation configuration table. In the BWP activation configuration table, 4 BWP configuration pairs are given and indicated by the BWP indication information of four bits. Of course, only four BWP configuration pairs are illustrated as an example, and actually there may be more BWP configuration pairs, which is not limited herein.

**Table 3**

| BWP indication information | BWP configuration pair | |
|---|---|---|
| | First configuration sub-pair | Second configuration sub-pair |
| 0000 | downlink BWP identifier 1 and CC1 | downlink BWP identifier 2 and CC2 |
| | uplink BWP identifier 1 and CC1 | uplink BWP identifier 2 and CC2 |
| 0001 | downlink BWP identifier 1 and CC1 | downlink BWP identifier 3 and CC3 |
| | uplink BWP identifier 2 and CC2 | uplink BWP identifier 3 and CC3 |
| 0010 | downlink BWP identifier 1 and CC1 | downlink BWP identifier 4 and CC4 |
| | uplink BWP identifier 3 and CC3 | uplink BWP identifier 4 and CC4 |
| 0011 | downlink BWP identifier 1 and CC1 | downlink BWP identifier 2 and CC2 |
| | uplink BWP identifier 4 and CC4 | uplink BWP identifier 2 and CC2 |
| .... | .... | .... |

It can be seen from the above Table 3 that the BWP indication information is indicated by four bits, and each piece of the BWP indication information corresponds to one BWP configuration pair. The BWP configuration pair includes a first configuration sub-pair and a second configuration sub-pair. The first configuration sub-pair indicates a downlink BWP identifier, a carrier identifier corresponding to the downlink BWP identifier, and an uplink BWP identifier and a carrier identifier corresponding to the uplink BWP identifier. The second configuration sub-pair indicates a downlink BWP identifier and a carrier identifier corresponding to the downlink BWP identifier, and an uplink BWP identifier and a carrier identifier corresponding to the uplink BWP identifier.

Third, BWP activation configuration. That is, the base station may trigger the UE to obtain a target BWP configuration pair through a BWP activation configuration, and determine a target SBFD frequency domain resource associated with the target BWP configuration pair.

In an example, the BWP activation configuration process may include the following steps.

At step S11, the base station sends a BWP activation configuration to the UE, where the BWP activation configuration includes target BWP indication information, for example, any piece of BWP indication information in the BWP activation configuration table, such as 0000 and 0001 and the like.

In an example, the base station may send the BWP activation configuration to the UE through a DCI message, and the UE receives the BWP activation configuration through the DCI message. In some embodiments, the base station sends the BWP activation configuration to the UE through an MAC-CE message, and the UE receives the BWP activation configuration from through the MAC-CE message. In some embodiments, the base station sends the BWP activation configuration to the UE through an RRC message, and the UE receives the BWP activation configuration through the RRC message.

At step S12, after receiving the BWP activation configuration, the UE obtains a target BWP configuration pair corresponding to the target BWP indication information (in the BWP activation configuration) from the BWP activation configuration table, where the target BWP configuration pair may include a target BWP identifier and a target carrier identifier.

In an example, the UE may obtain the target BWP configuration pair from the BWP activation configuration table in Table 2. The target BWP configuration pair includes a target downlink BWP identifier and a target uplink BWP identifier, where the target downlink BWP identifier and the target uplink BWP identifier are same or different. The target BWP configuration pair includes a carrier identifier corresponding to the target downlink BWP identifier and a carrier identifier corresponding to the target uplink BWP identifier, where the carrier identifier corresponding to the target downlink BWP identifier and the carrier identifier corresponding to the target uplink BWP identifier are same or different.

In an example, the UE may obtain the target BWP configuration pair from the BWP activation configuration table in Table 3. The target BWP configuration pair includes a target first configuration sub-pair and a target second configuration sub-pair. The target first configuration sub-pair includes a target first downlink BWP identifier, a target first uplink BWP identifier, a carrier identifier corresponding to the target first downlink BWP identifier, and a carrier identifier corresponding to the target first uplink BWP identifier. The target first downlink BWP identifier and the target first uplink BWP identifier are same or different. The carrier identifier corresponding to the target first downlink BWP identifier and the carrier identifier corresponding to the target first uplink BWP identifier are same or different.

The target second configuration sub-pair includes a target second downlink BWP identifier, a target second uplink BWP identifier, a carrier identifier corresponding to the target second downlink BWP identifier and a carrier identifier corresponding to the target second uplink BWP identifier. The target second downlink BWP identifier and the target second uplink BWP identifier are same or different. The carrier identifier corresponding to the target second downlink BWP identifier and the carrier identifier corresponding to the target second uplink BWP identifier are same or different.

In an example, the BWP activation configuration may include a switching flag and the target BWP indication information. If the switching flag is a first value, the UE may obtain the target BWP configuration pair corresponding to the target BWP indication information from the BWP activation configuration table, that is, step S12 can be performed. If the switching flag is not the first value, the user equipment is prohibited to obtain the target BWP configuration pair corresponding to the target BWP indication information from the BWP activation configuration table, that is, step S12 and subsequent steps are not performed.

For example, the switching flag and the target BWP indication information may be carried in the DCI message. For example, the DCI message may include bandwidth part indicator and the switching flag. If the switching flag is 00 (not the first value), the bandwidth part indicator is used for original BWP switching indication. If the switching flag is 01 (not the first value), the bandwidth part indicator is used for the BWP indication of the SBFD under a single carrier. The processing for the switching flag 00 and 01 is not limited herein.

If the switching flag is 10 (for example, 10 is the first value), the bandwidth part indicator is used for the BWP indication of the SBFD under multiple carriers, that is, the bandwidth part indicator is used as the target BWP indication information used for indicating the target BWP configuration pair.

As shown in Table 4, it is an example of the DCI message, and the contents of the DCI message are not limited herein.

**Table 4**

| DCI IE | Bits | Note |
|---|---|---|
| BWP indicator switching (switching flag/BWP indication switching) | 2 | 00: legacy BWP indicator |
| | | 01: BWP indicator for Full Duplex for single carrier |
| | | 10: BWP indicator for Full Duplex for multiple carriers |
| Bandwidth part indicator | N bits | Used to indicate the Bandwidth part pair (target BWP indication information) |

In an example, the BWP activation configuration may include the target BWP indication information. If the target BWP indication information is a target value (any value other than the BWP indication information shown in Table 2 or 3), the UE is prohibited to obtain the target BWP configuration pair corresponding to the target BWP indication information from the BWP activation configuration table, that is, step 12 and subsequent steps are not performed. Alternatively, if the target BWP indication information is not the target value (any value in the Table 2 or 3), the UE may obtain the target BWP configuration pair corresponding to the target BWP indication information from the BWP activation configuration table, that is, step S12 is performed.

For example, a new bandwidth part indicator for SBFD for multiple carriers IE is added to the DCI message to distinguish bandwidth part indicator. Referring to Table 5, it is an example of the DCI message.

**Table 5**

| DCI IE | Bits | Note |
|---|---|---|
| Bandwidth part indicator for SBFD for multiple carrier | N bits | Used to indicate bandwidth part pair (target BWP indication information) |

At step S13, the UE determines a target SBFD frequency domain resource associated with the target BWP configuration pair based on the BWP frequency domain resource configuration information. For example, since target BWP configuration pair includes a target BWP identifier and a target carrier identifier, and the BWP frequency domain resource configuration information includes a mapping relationship between BWP identifier & carrier identifier and SBFD frequency domain resource, the UE may, based on the mapping relationship between BWP identifier & carrier identifier and SBFD frequency domain resource, determine the target SBFD frequency domain resource associated with the target BWP identifier and the target carrier identifier.

At step S14, the UE performs data transmission based on the target SBFD frequency domain resource.

For example, if the target SBFD frequency domain resource includes the BWP frequency domain resource of the uplink BWP, the UE may send data, for example, send application data or signal or the like in the frequency domain resource of the uplink BWP.

For example, if the target SBFD frequency domain resource includes the BWP frequency domain resource of the downlink BWP, the UE may receive data, for example, receive application data or signal or the like in the BWP frequency domain resource of the downlink BWP.

At step S15, the base station, based on the BWP frequency domain resource configuration information, determines the target SBFD frequency domain resource associated with the target BWP configuration pair (i.e., the target BWP configuration pair corresponding to the UE).

At step S16, the base station transmits data with the UE based on the target SBFD frequency domain resource.

For example, if the target SBFD frequency domain resource includes the BWP frequency domain resource of the uplink BWP, the base station may receive data, for example, receive application data or signal or the like in the BWP frequency domain resource of the uplink BWP.

If the target SBFD frequency domain resource includes the BWP frequency domain resource of the downlink BWP, the base station may send data, for example, send application data or signal or the like in the BWP frequency domain resource of the downlink BWP.

Fourth, switching of BWP activation configuration. After the base station sends the BWP activation configuration to the UE, within a BWP switching time, if the SBFD frequency domain resource used by the UE changes, the base station may also obtain updated BWP activation configuration, where the updated BWP activation configuration includes updated target BWP indication information, and the updated target BWP indication information corresponds to the changed SBFD frequency domain resource.

The base station sends the updated BWP activation configuration to the UE. The UE obtains the target BWP configuration pair corresponding to the updated target BWP indication information from the BWP activation configuration table. Based on the BWP frequency domain resource configuration information, the UE determines the target SBFD frequency domain resource associated with the target BWP configuration pair. The base station sends the updated BWP activation configuration to the UE through a DCI message, an MAC-CE message or an RRC message.

As shown in FIG. 4A, it is a schematic diagram illustrating single BWP switching under multiple carriers, showing activation and switching of single BWP matching pair. DL BWP#1 (downlink BWP1) is in the CC1, UL BWP#1 (uplink BWP1) is in the CC1, BWP#2 (downlink BWP2 and uplink BWP2) is in the CC2, DL BWP#3 (downlink BWP3) is in the CC3, and the UL BWP#3 (uplink BWP1) is in the CC3.

DL BWP#1 and UL BWP#1 have asymmetric frequency domain resource allocation, and DL BWP#3 and UL BWP#3 have asymmetric frequency domain resource allocation. DL BWP#3 and UL BWP#3 in UL BWP#3 have non-continuous resource allocation. DL BWP and UL BWP of BWP#2 occupy the same frequency domain resource allocation.

As shown in FIG. 4A, within a BWP switching time, firstly, the base station activates DL BWP#1 and UL BWP#1 in the CC1 through a DCI message. Then, the base station notifies the UE through a DCI message that DL BWP#1 and UL BWP#1 in the CC1 are switched to BWP#2 in the CC2. Finally, the base station notifies the UE through a DCI message that BWP#2 in the CC2 is switched to DL BWP#3 and UL BWP#3 in the CC3.

The abscissa is time/event and the ordinate is frequency. BWP-In activity Timer Expiry represents the DCI activity timer expires, that is, switching is performed within the BWP switching time.

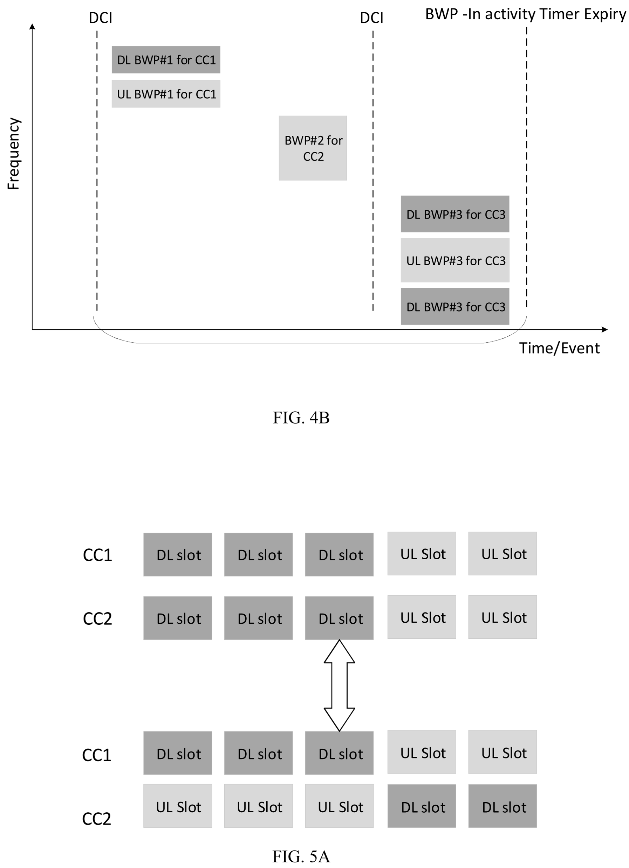

As shown in FIG. 4B, it is a schematic diagram illustrating switching of multiple BWPs under multiple carriers, showing activation and switching of multiple BWP matching pairs. DL BWP#1 (downlink BWP1) is in the CC1, UL BWP#1 (uplink BWP1) is in the CC1, BWP#2 (downlink BWP2 and uplink BWP2) is in the CC2, DL BWP#3 (downlink BWP3) is in the CC3, and UL BWP#3 (uplink BWP1) is in the CC3.

DL BWP#1 and UL BWP#1 have asymmetric frequency domain resource allocation, and DL BWP#3 and UL BWP#3 have asymmetric frequency domain resource allocation. DL BWP#3and DL BWP#3 in UL BWP#3 have non-continuous resource allocation. DL BWP and UL BWP in BWP#2 occupy a same frequency domain resource allocation.

Within a BWP switching time, the base station activates DL BWP#1 and UL BWP#1 in the CC1 and BWP#2 in the CC2 through a DCI message. The base station notifies the UE through a DCI message that DL BWP#1 and UL BWP#1 in the CC1 and BWP#2 in the CC2 are switched to DL BWP#3 and UL BWP#3 in the CC3.

In an example, based on the processes of BWP frequency domain resource configuration, the BWP activation configuration table, the BWP activation configuration and BWP activation configuration switching and the like, the SBFD frequency domain resource allocation and activation method based on BWP can be achieved under multiple carriers. When a single BWP or multiple BWPs are configured, the BWP matching pair supporting the SBFD is activated, for example, the base station achieves the activation of the SBFD by indicating the BWP activation configuration.

For a carrier to be deactivated, if the base station performs deactivation on a particular carrier through DCI, the SBFD configuration in the carrier is invalid. If the base station activates a particular carrier through DCI, DL/UL configuration is valid , but the SBFD configuration will not be valid . It is required to indicate, by one bit, whether the BWP-based SBFD configuration is valid.

In an example, in the BWP-based SBFD resource configuration and activation method, the base station may configure the DL/UL resource in each carrier as same or different BWP pair. The base station may semi-statically/dynamically configure one-to-one or one-to-multiple DL/UL BWP matching group (the central frequencies of DL/UL BWPs are same or different). The base station may use multiple BWPs or DL/UL BWP matching pairs for activation/switching, so as to achieve dynamic configuration for the SBFD resource. The base station may introduce a carrier-based BWP activation parameter and/or BWP deactivation parameter into the DCI message to dynamically adjust the SBFD configuration parameter.

In the above process, the BWP-based SBFD frequency domain resource allocation and activation method under multiple carriers is described. The present example further involves a carrier-based SBFD frequency domain resource allocation and activation method under multiple carriers, which will be described below.

Fifth, the carrier-based SBFD frequency resource allocation and activation under multiple carriers.

In an example, the base station may configure the SBFD frequency domain resources in multiple carriers in a carrier set. The base station may send SBFD resource allocation information to the UE, where the SBFD resource allocation information is configured to indicate the SBFD frequency domain resources configured in multiple carriers in the carrier set. In the SBFD frequency domain resources configured in multiple carriers in the carrier set, there is at least one set of opposite slots in different carriers of the carrier set, where the opposite slots include the uplink slot and the downlink slot, that is, the slot of one carrier is an uplink slot and the slot of another carrier is a downlink slot.

Taking the carrier set including two carriers (a first carrier and a second carrier) as an example. If a slot k of the first carrier is an uplink slot and a slot k of the second carrier is a downlink slot, it means that the slots k are opposite slots, namely, there is one set of opposite slots k in different carriers in the carrier set, where the slot k may be any one slot.

As shown in FIG. 5A, it is a schematic diagram illustrating an SBFD frequency domain resource allocation based on multiple carriers, where the SBFD frequency domain resources are formed in multiple carriers, for example, the SBFD frequency domain resources are formed in the CC1 and CC2.

In an example, before the SBFD frequency domain resources are formed in multiple carriers in the carrier set, different carriers in the carrier set may have a same slot. For example, as shown in FIG. 5A, the slot 0 of the CC1 and the slot 0 of the CC2 both are DL slots (downlink slots), the slot 1 of the CC1 and the slot 1 of the CC2 both are DL slots, the slot 2 of the CC1 and the slot 2 of the CC2 both are DL slots, the slot 3 of the CC1 and the slot 3 of the CC2 both are UL slots (uplink slots), and the slot 4 of the CC1 and the slot 4 of the CC2 both are UL slots.

In order to form the SBFD frequency domain resources in multiple carriers in the carrier set, there is at least one set of opposite slots in different carriers in the carrier set. For example, as shown in FIG. 5A, the slot 0 of the CC1 is DL slot, and the slot 0 of the CC2 is UL slot; the slot 1 of the CC1 is DL slot, and the slot 1 of the CC2 is UL slot; the slot 2 of the CC1 is DL slot, and the slot 2 of the CC2 is UL slot; the slot 3 of the CC1 is UL slot and the slot 3 of the CC2 is DL slot; the slot 4 of the CC1 is UL slot, and the slot 4 of the CC2 is DL slot.

Of course, the above five sets of opposite slots are only exemplified. In order to form the SBFD frequency resources in multiple carriers, only one set of opposite slots is required. For example, the slots k are opposite slots, where the slot k may be any slot. Other slots may be opposite slots or same slots.

In an example, in order to form the SBFD frequency domain resources in multiple carriers, the following manners may be employed.

Manner 1: the slots in different carriers (for example, in the CC1 and CC2, where the CC1 and CC2 are Intra-band CAs) are set to flexible slots. Then, the flexible slot is specified as DL slot or UL slot by using SFI (slot format indicator). When the flexible slot is specified as DL slot or UL slot by using SFI, at least one set of opposite slots is required in different carriers, and thus, the SBFD frequency domain resources are formed in multiple carriers.

For example, when the base station sends SBFD resource allocation information to the UE, the SBFD resource allocation information includes a first allocation indication and a second allocation indication. For each carrier in multiple carriers, the first allocation indication is configured to configure all slots included in the carrier as flexible slots, that is, the slots in different carriers are set to flexible slots. The second allocation indication is configured to indicate each flexible slot is used for an uplink slot or a downlink slot, that is, the flexible slot is specified as a DL slot or a UL slot by using the SFI.

When the second allocation indication is configured to indicate that each flexible slot is used for an uplink slot or a downlink slot, at least one set of opposite slots is required in different carriers as indicated by the slot structure in FIG. 5A.

Manner 2: different DL/UL configurations (i.e., configure different DL slots or UL slots) are configured in different carriers (e.g., CC1 and CC2, where the CC1 and the CC2 are Intra-band CAs) to form the SBFD frequency domain resources in multiple carriers. When DL slots or UL slots are configured for different carriers, at least one set of opposite slots is required in different carriers, and thus the SBFD frequency domain resources are formed in multiple carriers.

For example, when the base station sends the SBFD resource allocation information to the UE, the SBFD resource allocation information may include a third allocation indication. For each carrier of the multiple carriers, the third allocation indication (e.g., DL/UL configuration) is configured to configure each slot included in the carrier as an uplink slot or a downlink slot.

When each slot is configured as an uplink slot or a downlink slot by using the third allocation indication, at least one set of opposite slots is required in different carriers, as indicated by the slot structure in FIG. 5A.

Manner 3: by setting an offset, DL/UL configurations in each carrier are different, so as to form the SBFD frequency domain resources in multiple carriers. When an offset is set, at least one set of opposite slots is required in different carriers. The offset may be a slot offset and/or symbol offset.

For example, when the base station sends the SBFD resource allocation information to the UE, the SBFD resource allocation information may include a fourth allocation indication and a fifth allocation indication. For a first carrier (the first carrier may be any one carrier) in the multiple carriers, the fourth allocation indication is configured to configure each slot included in the first carrier as an uplink slot or a downlink slot. As shown in FIG. 5A, if the first carrier is the CC1, the fourth allocation indication makes indication by using the slot structure shown in FIG. 5A, that is, indicates five slots as DL, DL, DL, UL and UL respectively.

For a second carrier (there may be at least one second carrier) other than the first carrier, the fifth allocation indication is configured to indicate an offset between the second carrier and the first carrier. For example, the fifth allocation indication may be an RRC message which is configured to set the offset. For example, for each second carrier, the fifth allocation indication is configured to indicate an offset between the second carrier and the first carrier.

The offset may be a slot offset and/or a symbol offset. When the offset is a slot offset and a symbol slot, the maximum value of the symbol offset is a total number of symbols in one slot. When the offset is a symbol offset, the maximum value of the symbol offset may be or not limited to a total number of symbols in one slot.

It is supposed that the slot offset is m, which represents that offset is performed rightward by m slots. Thus, the slot 0 of the first carrier and the slot 0+m of the second carrier have a same slot, for example, both are uplink slots or a downlink slots; the slot 1 of the first carrier and the slot 1+m of the second carrier have a same slot, and so on. If the slot offset is m, which represents that offset is performed leftward by m slots, the slot 0 of the first carrier and the slot 0-m of the second carrier have a same slot, and the slot 1 of the first carrier and the slot 1-m of the second carrier have a same slot, and so on.

For example, if five slots of the first carrier are DL, DL, DL, UL and UL respectively, when the slot offset m represents that offset is performed rightward by 2 slots, the slot 0 of the first carrier and the slot 2 of the second carrier have a same slot, and the slot 2 of the second carrier is DL; the slot 1 of the first carrier and the slot 3 of the second carrier have a same slot, and the slot 3 of the second carrier is DL; the slot 2 of the first carrier and the slot 4 of the second carrier have a same slot, and the slot 4 of the second carrier is DL; the slot 3 of the first carrier and the slot 0 of the second carrier (cycling to the first slot from the last slot) have a same slot, and the slot 0 of the second carrier is UL; the slot 4 of the first carrier and the slot 1 of the second carrier have a same slot, and the slot 1 of the second carrier is UL. In conclusion, the five slots of the second carrier are UL, UL, DL, DL and DL respectively.

If the symbol offset is n, which represents that offset is performed rightward by n symbols, the symbol 0 of the first carrier and the symbol 0+n of the second carrier have a same symbol, that is, both of them are uplink symbols or a downlink symbols; the symbol 1 of the first carrier and the symbol 1+n of the second carrier have a same symbol, and so on. If the symbol offset is n, which represents that offset is performed leftward by n symbols, the symbol 0 of the first carrier and the symbol 0-n of the second carrier have a same symbol, and the symbol 1 of the first carrier and the symbol 1-n of the second carrier have a same symbol, and so on.

If the slot offset is m, which represents that offset is performed rightward by m slots, and the symbol offset is n, which represents that offset is performed rightward by n symbols, the slot 0 of the first carrier and the slot 0+m of the second carrier have a same slot, the slot 1 of the first carrier and the slot 1+m of the second carrier have a same slot, the symbol 0 of the first carrier and the symbol 0+n of the second carrier have a same symbol, and the symbol 1 of the first carrier and the symbol 1+n of the second carrier have a same symbol, and so on.

If the slot offset is m, which represents that offset is performed leftward by m slots, and the symbol offset is n, which represents that offset is performed leftward by n symbols, the slot 0 of the first carrier and the slot 0-m of the second carrier have a same slot, the slot 1 of the first carrier and the slot 1-m of the second carrier have a same slot, the symbol 0 of the first carrier and the symbol 0-n of the second carrier have a same symbol, and the symbol 1 of the first carrier and the symbol 1-n of the second carrier have a same symbol, and so on.

In an example, the fifth allocation indication is configured to indicate whether the offset between the second carrier and the first carrier is valid, for example, indicate that the offset is valid or the offset is not valid.

From the above, it can be seen that, the fifth allocation indication may include a validation indication bit. If the validation indication bit indicates that the offset between the second carrier and the first carrier is valid, for example, if the validation indication bit is a first value, the fifth allocation indication further includes the offset (e.g., the slot offset and/or symbol offset) between the second carrier and the first carrier. If the validation indication bit indicates that the offset between the second carrier and the first carrier is not valid, for example, if the validation indication bit is a second value, the fifth allocation indication may not include the offset between the second carrier and the first carrier.

Thus, the carrier-based SBFD frequency domain resource allocation is completed. The base station configures the SBFD frequency domain resources in multiple carriers in a carrier set, and sends the SBFD resource allocation information to the UE. The UE receives the SBFD resource allocation information. The SBFD resource allocation information is configured to indicate the SBFD frequency domain resources configured in multiple carriers.

After the carrier-based SBFD frequency domain resource allocation is completed, activation and deactivation of the carrier-based SBFD frequency domain resources may be involved. For example, for each carrier, the base station may send the SBFD configuration information corresponding to the carrier to the UE. The UE receives the SBFD configuration information. The SBFD configuration information is configured to indicate that the SBFD frequency domain resource in the carrier is valid or invalid, where the validation represents that activation is performed on the SBFD frequency domain resource in the carrier, and the invalidation represents that deactivation is performed on the SBFD frequency domain resource in the carrier.

For example, when the base station sends the SBFD configuration information to the UE, for a third carrier in multiple carriers, if the SBFD configuration information includes a deactivation indication of the third carrier, the deactivation indication is configured to indicate deactivation is performed in the third carrier and indicate that the SBFD frequency domain resource in the third carrier is invalid.

When the base station sends the SBFD configuration information to the UE, for a fourth carrier in the multiple carriers, if the SBFD configuration information includes an activation indication and a validation indication of the fourth carrier, the activation indication is configured to perform activation on the fourth carrier, and the validation indication is configured to indicate that the SBFD frequency domain resource in the fourth carrier is valid or invalid.

For example, in order to minimize the influence on legacy UE, the activation and deactivation for the SBFD frequency domain resources and the activation and deactivation for the carrier may be performed in the following manner: if the base station performs deactivation on a carrier through DCI, the SBFD frequency domain resource in the carrier is invalid. In other words, the base station sends the SBFD configuration information to the UE through DCI, and the SBFD configuration information includes a deactivation indication for the carrier, where the deactivation indication is configured to perform deactivation on the carrier and indicate that the SBFD frequency domain resource in the carrier is invalid.

If the base station activates a carrier through DCI, the DL/UL configuration in the carrier is valid but the SBFD configuration in the carrier will not be valid. Whether the SBFD configuration is valid may be indicated by 1 bit. In this case, the base station may, based on cell user feature and user number, flexibly control whether the SBFD configuration is valid. The base station may send the SBFD configuration information to the UE through DCI, where the SBFD configuration information includes an activation indication of a carrier, which is configured to perform activation on the carrier. The SBFD configuration information may also include a 1-bit validation indication. If the validation indication is a first value (e.g., 1), it indicates that the SBFD frequency domain resource in the carrier is valid; if the validation indication is a second value (e.g., 0), it indicates that the SBFD frequency domain resource in the carrier is invalid.

For example, Table 6 is an example of a carrier-based SBFD configuration activation indication (SBFD configuration enabling, that is, validation indication in the SBFD configuration information) under multiple carriers.

**Table 6**

| Parameter name | Note |
|---|---|
| SBFD configuration enabling | In the form of Bitmap, where each bit corresponds to one CC, 1 represents the SBFD configuration is valid (the SBFD frequency domain resource in the CC is valid), and 0 represents the SBFD configuration is invalid (the SBFD frequency domain resource in the CC is invalid) |

In an example, for the above manner 3, the fifth allocation indication is configured to indicate whether the offset between the second carrier and the first carrier is valid. Based on this, the fifth allocation indication may also be used to implicitly indicate whether the SBFD configuration is valid. For example, if the fifth allocation indication is configured to indicate that the offset between the second carrier and the first carrier is valid, the fifth allocation indication implicitly indicates that the SBFD frequency domain resource in the second carrier is valid. If the fifth allocation indication is configured to indicate that the offset between the second carrier and the first carrier is invalid, the fifth allocation indication implicitly indicates that the SBFD frequency domain resource in the second carrier is invalid.

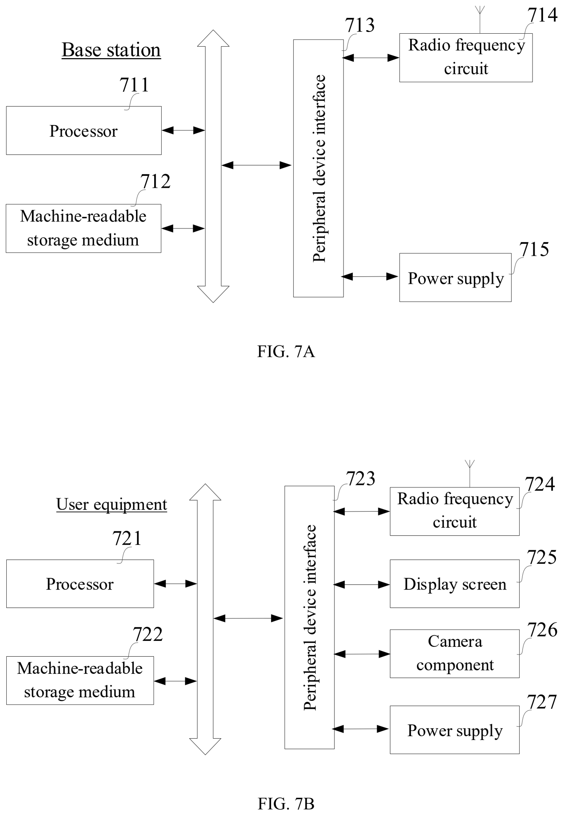

For example, as shown in FIG. 7, it is an example of a carrier-based ca-offset configuration activation indication (ca-offset enabling) under multiple carriers. The ca-offset configuration activation indication is configured to indicate that the offset between the second carrier and the first carrier (e.g., slot offset and/or symbol offset) is valid or not. Further, the ca-offset configuration activation indication is configured to indicate that the SBFD frequency domain resource in the second carrier is valid or not.

**Table 7**

| Parameter name | Note |
|---|---|
| ca-offset enabling | In the form of bitmap, where each bit corresponds to one CC, 1 represents that RRC ca-offset configuration is valid (slot offset and/or symbol offset is valid), and implicitly represents that the SBFD frequency domain resource is valid, and 0 represents that RRC ca-offset configuration is invalid (slot offset and/or symbol offset is invalid), and implicitly represents that the SBFD frequency domain resource is invalid. |

When the ca-offset configuration activation indication indicates that the offset between the second carrier and the first carrier is valid, it also indicates that the offset between the second carrier and the first carrier (e.g., slot offset and/or symbol offset). For the offset of each carrier, the offset may be distributed to the UE by RRC message or by pre-configuration, or configured by DCI message. It is noted that multiple carriers may share one offset or one offset is configured for each carrier.

For example, the offset is a slot offset. As shown in Table 8, it is a carrier-based ca-slotoffset configuration parameter (i.e., slot offset) under multiple carriers.

**Table 8**

| Parameter name | Note |
|---|---|
| ca-SlotOffset | refSCS15kHz INTEGER (-2..2), |
| | refSCS30KHz INTEGER (-5..5), |
| | refSCS60KHz INTEGER (-10..10), |
| | refSCS120KHz INTEGER (-20..20) |

For refSCS15kHz, the slot offset may be -2, -1, 0, 1 and 2, where -2 represents that offset is performed leftward by 2 slots, and 2 represents that offset is performed rightward by 2 slots and so on. For refSCS30KHz, the slot offset may be -5, -4, -3, -2, -1, 0, 1, 2, 3, 4, 5 and so on.

Taking the offset being a symbol offset as an example, as shown in Table 9, it is a carrier-based ca-symboloffset configuration parameter (i.e., symbol offset) under multiple carriers.

**Table 9**

| Parameter name | Note |
|---|---|
| ca-SymbolOffset | INTEGER (0..13) |

The symbol offset may be 0, 1, 2, 3, 4, 5, 6, 7, 8, 9, 10, 11, 12 and 13, where the symbol offset represents a number of symbols that offset is performed leftward or a number of symbols that offset is performed rightward.

Sixth, the carrier-based SBFD frequency domain resource allocation and activation under multiple carriers

In an example, the base station may configure the SBFD frequency domain resource within each carrier in multiple carriers. The base station may send the SBFD resource allocation information to the UE, where the SBFD resource allocation information is configured to indicate the SBFD frequency domain resource configured in each carrier. In the SBFD frequency domain resource configured in each carrier, there is at least one set of opposite slots in the carrier, where the opposite slots may include the uplink slot and the downlink slot.

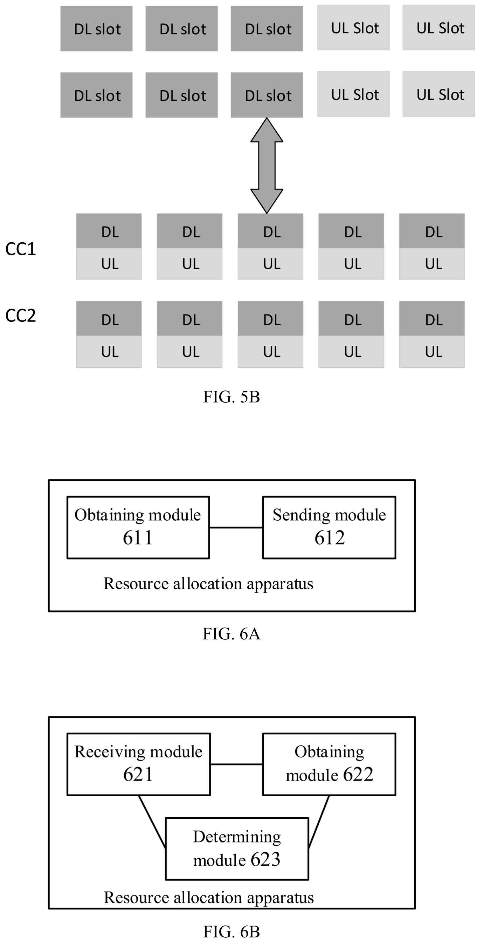

As shown in FIG. 5B, it is a schematic diagram illustrating an SBFD frequency domain resource allocation based on multiple carriers. For each carrier in multiple carriers, an SBFD frequency domain resource may be formed in the carrier. For example, an SBFD frequency domain resource may be formed in the CC1 and CC2.

In an example, before the SBFD frequency domain resource is formed in each carrier, same slots are in the carriers, for example, the slots in the carrier include DL slot, DL slot, DL slot, UL slot and UL slot sequentially.

In order to form the SBFD frequency domain resource in the carrier, at least one set of opposite slots is required in the carrier. For example, as shown in FIG. 5B, the slot 0 of the CC1 includes DL slot and UL slot, and the slot 1 of the CC1 includes DL slot and UL slot, the slot 2 of the CC1 includes DL slot and UL slot, the slot 3 of the CC1 includes DL slot and UL slot, the slot 4 of the CC1 includes DL slot and UL slot; the slot 0 of the CC2 includes DL slot and UL slot, the slot 1 of the CC2 includes DL slot and UL slot, the slot 2 of the CC2 includes DL slot and UL slot, the slot 3 of the CC2 includes DL slot and UL slot, and the slot 4 of the CC2 includes DL slot and UL slot.

Thus, the carrier-based SBFD frequency domain resource allocation is completed. The base station configures the SBFD frequency domain resource in each carrier, and sends the SBFD resource allocation information to the UE. The UE receives the SBFD resource allocation information which is configured to indicate the SBFD frequency domain resource configured in each carrier.

After the carrier-based SBFD frequency domain resource allocation is completed, activation and deactivation of the carrier-based SBFD frequency domain resources may be involved. For example, for each carrier, the base station may send the SBFD configuration information corresponding to the carrier to the UE. The UE receives the SBFD configuration information. The SBFD configuration information is configured to indicate that the SBFD frequency domain resource in the carrier is valid or invalid, where the validation represents that activation is performed on the SBFD frequency domain resource in the carrier and the invalidation represents that deactivation is performed on the SBFD frequency domain resource in the carrier.

For example, when the base station sends the SBFD configuration information to the UE, for a third carrier in multiple carriers, if the SBFD configuration information includes a deactivation indication of the third carrier, the deactivation indication is configured to indicate deactivation is performed in the third carrier and indicate that the SBFD frequency domain resource in the third carrier is invalid.

When the base station sends the SBFD configuration information to the UE, for a fourth carrier in the multiple carriers, if the SBFD configuration information includes an activation indication and a validation indication of the fourth carrier, the activation indication is configured to perform activation on the fourth carrier and the validation indication is configured to indicate that the SBFD frequency domain resource in the fourth carrier is valid or invalid.

For example, there is an SBFD configuration in each carrier, and the base station separately controls the SBFD configuration of each carrier to be valid or not. If the base station performs deactivation on a carrier through DCI, the SBFD configuration in the carrier is invalid. If the base station performs activation on a carrier through DCI, the DL/UL configuration in the carrier is valid but the SBFD configuration in the carrier will not be valid. Whether the SBFD configuration is valid can be indicated by one bit. In this way, the base station may, based on cell user feature and user number, flexibly control whether the SBFD configuration is valid.

For example, for the SBFD configuration of each carrier, the base station may send it to UE through an RRC message. For the SBFD configuration of each carrier, the base station may independently activate or deactivate it.

In conclusion, for the carrier-based SBFD frequency domain resource configuration and activation, an SBFD resource parameter may be independently configured for each carrier. Then, by using the SBFD configuration activation and/or deactivation parameter introduced by DCI message, the base station is enabled to flexibly control the SBFD configuration in each carrier.

It can be seen from the above technical solutions, that flexible BWP configuration is used in multiple carriers, and flexible SBFD frequency domain resources (e.g., downlink frequency domain resource and uplink frequency domain resource) are configured for the UE by using the BWP to support the data transmission of the TDD system. In this way, the resource utilization rate, the network coverage and the network capacity are increased; the uplink transmission resource and the cell coverage scope are increased; the uplink transmission latency is reduced and the uplink transmission capacity is increased. Without affecting the 5G system, flexible BWP configuration is used in multiple carriers, and the activation and switching can configure flexible DL/UL frequency domain resources for the UE to support the base station/UE to perform simultaneous reception and transmission in the TDD system. In this way, the uplink transmission resource and the cell coverage scope are increased, the transmission latency is reduced and the uplink transmission capacity is increased.

Based on the same application idea, there is further provided a resource allocation apparatus corresponding to the above resource allocation method, and a base station and a UE. Since the principle for the base station and the UE to solve the problems is similar to that of the above resource allocation method, the implementation of the base station and the UE can be referred to the implementation of the above resource allocation method, and thus will not be repeated herein.

Based on the same application idea as the above method, an example of the present disclosure provides a resource allocation apparatus, which is applied to a base station. As shown in FIG. 6A, it is a structural schematic diagram illustrating the apparatus. The apparatus includes:

an obtaining module 611, configured to obtain bandwidth part (BWP) frequency domain resource configuration information; a sending module 612, configured to send the BWP frequency domain resource configuration information to a user equipment, where the BWP frequency domain resource configuration information includes a mapping relationship between resource identifier and sub-band full duplex (SBFD) frequency domain resource; and the resource identifier includes a BWP identifier and a carrier identifier; the sending module 612 is further configured to send target BWP indication information to the user equipment, where the target BWP indication information is configured to enable the user equipment to obtain a target BWP configuration pair corresponding to the target BWP indication information from a BWP activation configuration table, and the target BWP configuration pair includes a target BWP identifier and a target carrier identifier, and to determine, based on the mapping relationship between the resource identifier and the SBFD frequency domain resource, a target SBFD frequency domain resource associated with the target BWP identifier and the target carrier identifier; where the BWP activation configuration table includes a mapping relationship between BWP indication information and BWP configuration pair.

Based on the same application idea as the above method, an example of the present disclosure provides a resource allocation apparatus which is applied to a user equipment. As shown in FIG. 6B, it is a structural schematic diagram illustrating the apparatus. The apparatus includes:

a receiving module 621, configured to receive bandwidth part (BWP) frequency domain resource configuration information from a base station, where the BWP frequency domain resource configuration information includes a mapping relationship between resource identifier and sub-band full duplex (SBFD) frequency domain resource; and the resource identifier includes a BWP identifier and a carrier identifier; the receiving module 621 is further configured to receive target BWP indication information from the base station; and an obtaining module 622, configured to obtain a target BWP configuration pair corresponding to the target BWP indication information from an obtained BWP activation configuration table, where the target BWP configuration pair includes a target BWP identifier and a target carrier identifier; the BWP activation configuration table includes a mapping relationship between BWP indication information and BWP configuration pair; a determining module 623, configured to, based on the mapping relationship between resource identifier and SBFD frequency domain resource, determine a target SBFD frequency domain resource associated with the target BWP identifier and the target carrier identifier in the target BWP configuration pair.

In an example, the BWP identifier includes an uplink BWP identifier and a downlink BWP identifier, the uplink BWP identifier and the downlink BWP identifier are same, and the carrier identifier includes a first carrier identifier and a second carrier identifier, where: the uplink BWP identifier corresponds to the first carrier identifier, and the downlink BWP identifier corresponds to the second carrier identifier; or, the uplink BWP identifier corresponds to the first carrier identifier, and the uplink BWP identifier and the downlink BWP identifier both correspond to the second carrier identifier; or, the downlink BWP identifier corresponds to the first carrier identifier, and the uplink BWP identifier and the downlink BWP identifier both correspond to the second carrier identifier; or, the uplink BWP identifier and the downlink BWP identifier both correspond to the first carrier identifier, and the uplink BWP identifier and the downlink BWP identifier both correspond to the second carrier identifier.

In an example, the BWP identifier includes an uplink BWP identifier and a downlink BWP identifier, and the uplink BWP identifier and the downlink BWP identifier are different; the carrier identifier includes a first carrier identifier and a second carrier identifier, the uplink BWP identifier corresponds to the first carrier identifier, and the downlink BWP identifier corresponds to the second carrier identifier; or, the BWP identifier includes a first uplink BWP identifier, a first downlink BWP identifier, a second uplink BWP identifier, and a second downlink BWP identifier, the first uplink BWP identifier and the first downlink BWP identifier are same, the second uplink BWP identifier and the second downlink BWP identifier are same, the first uplink BWP identifier and the second uplink BWP identifier are different, and the first downlink BWP identifier and the second downlink BWP identifier are different; the carrier identifier includes a first carrier identifier and a second carrier identifier, the first uplink BWP identifier and the first downlink BWP identifier correspond to the first carrier identifier, and the second uplink BWP identifier and the second downlink BWP identifier correspond to the second carrier identifier.

In an example, the SBFD frequency domain resource is a frequency domain resource configured within a carrier indicated by the carrier identifier, and the SBFD frequency domain resource is a frequency domain resource corresponding to the BWP identifier; the SBFD frequency domain resource corresponding to the uplink BWP identifier is different from the SBFD frequency domain frequency corresponding to the downlink BWP identifier, and the SBFD frequency domain resource corresponding to the uplink BWP identifier is identical to or different from the SBFD frequency domain frequency corresponding to the downlink BWP identifier in size. The carriers indicated by different carrier identifiers are carriers of an SBFD intra-subband or carriers of an SBFD inter-subband.

In an example, for the base station, the sending module 612 is further configured to send the BWP activation configuration table to the user equipment through a radio resource control (RRC) message. For the user equipment, the receiving module 621 is further configured to obtain the BWP activation configuration table pre-configured by the user equipment; or receive the BWP activation configuration table from the base station through an RRC message.

In an example, each BWP configuration pair in the BWP activation configuration table includes a downlink BWP identifier and a carrier identifier corresponding to the downlink BWP identifier, and an uplink BWP identifier and a carrier identifier corresponding to the uplink BWP identifier. The target BWP configuration pair includes a target downlink BWP identifier and a target uplink BWP identifier, and the target downlink BWP identifier and the target uplink BWP identifier are same or different.

The target BWP configuration pair includes a carrier identifier corresponding to the target downlink BWP identifier and a carrier identifier corresponding to the target uplink BWP identifier, and the carrier identifier corresponding to the target downlink BWP identifier and the carrier identifier corresponding to the target uplink BWP identifier are same or different.

In an example, each BWP configuration pair in the BWP activation configuration table includes a first configuration sub-pair and a second configuration sub-pair. The first configuration sub-pair includes a first downlink BWP identifier and a carrier identifier corresponding to the first downlink BWP identifier, and a first uplink BWP identifier and a carrier identifier corresponding to the first uplink BWP identifier. The second configuration sub-pair includes a second downlink BWP identifier and a carrier identifier corresponding to the second downlink BWP identifier, and a second uplink BWP identifier and a carrier identifier corresponding to the second uplink BWP identifier.

The target BWP configuration pair includes a target first configuration sub-pair and a target second configuration sub-pair. The target first configuration sub-pair includes a target first downlink BWP identifier and a target first uplink BWP identifier, and the target first downlink BWP identifier and the target first uplink BWP identifier are same or different. The target first configuration sub-pair includes a carrier identifier corresponding to the target first downlink BWP identifier and a carrier identifier corresponding to the target first uplink BWP identifier, and the carrier identifier corresponding to the target first downlink BWP identifier and the carrier identifier corresponding to the target first uplink BWP identifier are same or different.

The target second configuration sub-pair includes a target second downlink BWP identifier and a target second uplink BWP identifier, and the target second downlink BWP identifier and the target second uplink BWP identifier are same or different. The target second configuration sub-pair includes a carrier identifier corresponding to the target second downlink BWP identifier and a carrier identifier corresponding to the target second uplink BWP identifier, and the carrier identifier corresponding to the target second downlink BWP identifier and the carrier identifier corresponding to the target second uplink BWP identifier are same or different.

In an example, for the base station, when sending the target BWP indication information to the user equipment, the sending module 612 is configured to: send a BWP activation configuration to the user equipment through a downlink control information (DCI) message; or, send a BWP activation configuration to the user equipment through a medium access control-control element (MAC-CE) message; or, send a BWP activation configuration to the user equipment through an RRC message. For the user equipment, when receiving the target BWP indication information from the base station, the receiving module 621 is configured to: receive a BWP activation configuration from the base station through a downlink control information (DCI) message; or, receive a BWP activation configuration from the base station through a medium access control-control element (MAC-CE) message; or, receive a BWP activation configuration from the base station through an RRC message.

The BWP activation configuration includes the target BWP indication information and a switching flag. If the switching flag is a first value, the user equipment is indicated to obtain the target BWP configuration pair corresponding to the target BWP indication information from the BWP activation configuration table. The obtaining module 622 is further configured to obtain the target BWP configuration pair corresponding to the target BWP indication information from the BWP activation configuration table.

If the switching flag is not the first value, the user equipment is indicated not to obtain the target BWP configuration pair corresponding to the target BWP indication information from the BWP activation configuration table. The obtaining module 622 is further configured to prohibit to obtain the target BWP configuration pair corresponding to the target BWP indication information from the BWP activation configuration table.

Alternatively, the BWP activation configuration includes the target BWP indication information. If the target BWP indication information is a target value, the user equipment is indicated not to obtain the target BWP configuration pair corresponding to the target BWP indication information from the BWP activation configuration table. The obtaining module 622 is further configured to prohibit to obtain the target BWP configuration pair corresponding to the target BWP indication information from the BWP activation configuration table.

If the target BWP indication information is not the target value, the user equipment is indicated to obtain the target BWP configuration pair corresponding to the target BWP indication information from the BWP activation configuration table. The obtaining module 622 is further configured to obtain the target BWP configuration pair corresponding to the target BWP indication information from the BWP activation configuration table.

In an example, for the base station, the obtaining module 611 is further configured to, within a BWP switching time, if the SBFD frequency domain resource used by the user equipment changes, obtain updated target BWP indication information, where the updated target BWP indication information corresponds to the changed SBFD frequency domain resource. The sending module 612 is further configured to send the updated target BWP indication information to the user equipment, where the updated target BWP indication information is configured to enable the user equipment to obtain the target BWP configuration pair corresponding to the updated target BWP indication information from the BWP activation configuration table.

For the user equipment, the receiving module 621 is further configured to, within a BWP switching time, receive updated target BWP indication information from the base station, where the updated target BWP indication information corresponds to a changed SBFD frequency domain resource; the obtaining module 622 is further configured to obtain the target BWP configuration pair corresponding to the updated target BWP indication information from the BWP activation configuration table.

Based on the same application idea as the above method, an example of the present disclosure provides a resource allocation apparatus, which is applied to a base station. The apparatus includes: an obtaining module, configured to obtain sub-band full duplex (SBFD) resource allocation information; a sending module, configured to send the SBFD resource allocation information to a user equipment, where the SBFD resource allocation information is configured to indicate SBFD frequency domain resources configured in multiple carriers in a carrier set, or an SBFD frequency domain resource configured in each carrier of multiple carriers; in the SBFD frequency domain resources configured in multiple carriers in the carrier set, there is at least one set of opposite slots in different carriers of the carrier set; in the SBFD frequency domain resource configured in each carrier of multiple carriers, there is at least one set of opposite slots in the carrier; where the opposite slots include the uplink slot and the downlink slot; the sending module is further configured to send SBFD configuration information corresponding to the carrier to the user equipment, where the SBFD configuration information is configured to indicate that the SBFD frequency domain resource in the carrier is valid or invalid.

Based on the same application idea as the above method, an example of the present disclosure provides a resource allocation apparatus, which is applied to a user equipment. The apparatus includes: a receiving module, configured to receive sub-band full duplex (SBFD) resource allocation information from a base station, where the SBFD resource allocation information is configured to indicate SBFD frequency domain resources configured in multiple carriers in a carrier set, or an SBFD frequency domain resource configured in each carrier of the multiple carriers; in the SBFD frequency domain resources configured in multiple carriers in the carrier set, there is at least one set of opposite slots in different carriers of the carrier set; in the SBFD frequency domain resource configured in each carrier of multiple carriers, there is at least one set of opposite slots in the carrier; where the opposite slots include the uplink slot and the downlink slot; the receiving module is further configured to: receive SBFD configuration information corresponding to the carrier from the base station, where the SBFD configuration information is configured to indicate that the SBFD frequency domain resource in the carrier is valid or invalid; and a determining module, configured to, based on the SBFD configuration information corresponding to the carrier, determine the SBFD frequency domain resource in the carrier is valid or invalid.

In an example, the SBFD resource allocation information is configured to indicate the SBFD frequency domain resources configured in multiple carriers in the carrier set, which includes the followings: the SBFD resource allocation information including a first allocation indication and a second allocation indication; for each carrier of the multiple carriers, the first allocation indication being used to configure all slots included in the carrier as flexible slots, and the second allocation indication being used to indicate that each flexible slot is used for an uplink slot or a downlink slot.

Alternatively, the SBFD resource allocation information includes a third allocation indication; for each carrier of the multiple carriers, the third allocation indication is configured to configure each slot included in the carrier as an uplink slot or a downlink slot.

Alternatively, the SBFD resource allocation information includes a fourth allocation indication and a fifth allocation indication; for a first carrier in the multiple carriers, the fourth allocation indication is configured to configure each slot included in the first carrier as an uplink slot or a downlink slot; for a second carrier other than the first carrier, the fifth allocation indication is configured to indicate an offset between the second carrier and the first carrier.

In an example, the fifth allocation indication is further used to indicate whether the offset between the second carrier and the first carrier is valid.

In an example, for a third carrier in the multiple carriers, if the SBFD configuration information includes a deactivation indication of the third carrier, the deactivation indication is configured to perform deactivation on the third carrier, and the deactivation indication is configured to indicate that the SBFD frequency domain resource in the third carrier is invalid.

In an example, for a fourth carrier in the multiple carriers, if the SBFD configuration information includes an activation indication and a validation indication of the fourth carrier, the activation indication is configured to perform activation on the fourth carrier and the validation indication is configured to indicate that the SBFD frequency domain resource in the fourth carrier is valid or invalid.

Based on the same application idea as the above method, an example of the present disclosure provides a base station. As shown in FIG. 7A, the base station may include a processor 711 and a machine-readable storage medium 712, where the machine-readable storage medium 712 stores machine executable instructions executable by the processor 711; the processor 711 is configured to execute the machine executable instructions to perform the resource allocation methods as mentioned above.

In an example, the processor 711 may include one or more processing cores, for example, 4-core processor, 8-core processor etc. The processor 711 may be implemented by at least one hardware form of Digital Signal Processing (DSP), Field-Programmable Gate Array (FPGA), and Programmable Logic Array (PLA). The processor 711 may also include a master processor and a co-processor, where the master processor is a processor used to process data in awakened state, which is also called Central Processing Unit (CPU); the co-processor is a low power processor used to process data in a standby state. In some embodiments, the processor 711 may be integrated with a Graphics Processing Unit (GPU) which is in charge of rendering and painting for contents to be displayed on a display screen.

In an example, the base station may further include: a peripheral device interface 713 and at least one peripheral device. The processor 711 and the peripheral device 713 may be connected with each other via a bus or signal line. Each peripheral device may be connected to the peripheral device interface 713 via a bus, a signal line or a circuit board. The peripheral device includes at least one of a radio frequency circuit 714 and a power supply 715.

The radio frequency circuit 714 is configured to receive and send radio frequency (RF) signals which are also called electromagnetic signals. The RF circuit 714 communicates with a communication network or another communication device through electromagnetic signals. The RF circuit 714 converts electrical signals into electromagnetic signals for sending, or converts received electromagnetic signals into electrical signals. In some embodiments, the RF circuit 714 includes an antenna system, a RF (radio frequency) transceiver, one or more amplifiers, a tuner, an oscillator, a digital signal processor, and a user identity module card and the like. The RF circuit 714 may communicate with the user equipment based on at least one wireless communication protocol. The wireless communication protocol includes but not limited to: World-Wide Web, Metropolitan Area Network, intranet, and mobile communication network of each generation (2G, 3G, 4G and 5G), wireless local area network, and/or, Wireless Fidelity (WiFi) network.

The power supply 715 is configured to provide power to each component in the base station. The power supply 715 may an alternating current power supply or a direct current power supply or a disposable battery or a chargeable battery.

Based on the same application idea as the above method, an example of the present disclosure provides a user equipment. As shown in FIG. 7B, the user equipment may include a processor 721 and a machine-readable storage medium 722, where the machine-readable storage medium 722 stores machine executable instructions executable by the processor 721; the processor 721 is configured to execute the machine executable instructions to perform the resource allocation methods as mentioned above.

In an example, the processor 721 may include one or more processing cores, for example, 4-core processor, 8-core processor etc. The processor 721 may be implemented by at least one hardware form of Digital Signal Processing (DSP), Field-Programmable Gate Array (FPGA), and Programmable Logic Array (PLA). The processor 721 may also include a master processor and a co-processor.

In an example, the user equipment may further optionally include: a peripheral device interface 723 and at least one peripheral device. The processor 721 and the peripheral device 723 may be connected with each other via a bus or signal line. Each peripheral device may be connected to the peripheral device interface 723 via a bus, a signal line or a circuit board. Specifically, the peripheral device includes at least one of a radio frequency circuit 724, a touch display screen 725, a camera component 726 and a power supply 727.

The radio frequency circuit 724 is configured to receive and send radio frequency (RF) signals which are also called electromagnetic signals. The RF circuit 724 communicates with a communication network or another communication device through electromagnetic signals. The RF circuit 724 converts electrical signals into electromagnetic signals for sending, or converts received electromagnetic signals into electrical signals. In some embodiments, the RF circuit 724 includes an antenna system, a RF transceiver, one or more amplifiers, a tuner, an oscillator, a digital signal processor, and a user identity module card and the like. The RF circuit 724 may communicate with the base station based on at least one wireless communication protocol. The wireless communication protocol includes but not limited to: World-Wide Web, Metropolitan Area Network, intranet, and mobile communication network of each generation (2G, 3G, 4G and 5G), wireless local area network, and/or, Wireless Fidelity (WiFi) network.

The display screen 725 is configured to display a user interface (UI). The UI may include graphics, text, icon, video and any combination thereof. When the display screen 725 is a touch display screen, the display screen 725 further has the capability to acquire touch signals on or above the surface of the display screen 725. The touch signals may be input as control signals into the processor 721 for processing. At this time, the display screen 725 may also be used to provide a virtual button and/or a virtual keyboard, which are also called soft button and/or soft keyboard.

In some embodiments, there may be one display screen 725 which is disposed on a front panel of the user equipment. In some other embodiments, there may be two display screens 725 which are disposed respectively on different surfaces of the user equipment or designed in a folding manner. In some embodiments, the display screen 725 may be a flexible display screen which is disposed on a bending surface or a folding surface of the user equipment. Further, the display screen 725 may also be disposed into irregular non-rectangular shape, i.e., special-shaped screen. The display screen 725 may be manufactured using materials such as Liquid Crystal Display (LCD) and Organic Light-Emitting Diode (OLED) and the like.

The camera component 726 is configured to acquire images or videos. In some embodiments, the camera component726 includes a front camera and a rear camera. Generally, the front camera is disposed on a front panel of the user equipment and the rear camera is disposed on a backplate of the user equipment. In some embodiments, there are at least two rear cameras which are any one of a main camera, a depth-of- field camera, a wide-angle camera and a long-focus camera, so as to achieve background virtualization function of the main camera and the depth-of-field camera in a fusion manner, and achieve panorama shooting and Virtual Reality (VR) shooting function of the main camera and the wide-angle camera and other fusion shooting functions in a fusion manner. In some embodiments, the camera component 726 may further include a single-color temperature flashlight or a dual color temperature flashlight. The dual color temperature flash light refers to a combination of a warm light flashlight and a cold light flashlight, and may be used for light compensation under different color temperatures.

The power supply 727 is configured to provide power for each component in the user equipment. The power supply 727 is an alternating current power supply, a direct current power supply, a disposable battery or a chargeable battery. When the power supply 727 is a chargeable battery, the chargeable battery may be a wired chargeable battery or a wireless chargeable battery. The wired chargeable battery is a battery charged by a wire, and the wireless chargeable battery is a battery charged by a wireless coil. The chargeable battery may also be used for supporting quick charge technology.

Based on the same application idea as the above method, an example of the present disclosure provides a machine-readable storage medium, storing several computer instructions, where the computer instructions are executed by a processor to perform the above resource allocation methods.

The machine-readable storage medium mentioned herein may be any of electronic, magnetic, optical or other physical storage devices and may contain or store information such as executable instructions, data and so on. For example, the machine-readable storage medium may be a Radom Access Memory (RAM), a volatile or non-volatile memory, a flash memory, a storage drive (e.g., hard disk drive), a solid-state hard disk, any type of storage disk (e.g., compact disk, Digital Video Disk (DVD)), or a similar storage medium, or a combination thereof.

The systems, apparatuses, modules or units described in the above examples may be specifically implemented by a computer entity or may be implemented by a product with a particular function. A typical implementing device may be a computer and the computer may be specifically a personal computer, a laptop computer, a cellular phone, a camera phone, a smart phone, a personal digital assistant, a media player, a navigation device, an email transceiver, a game console, a tablet computer, a wearable device, or a combination of any several devices of the above devices.

The foregoing descriptions are only examples of the present disclosure but not intended to limit the present disclosure. For the persons skilled in the art, various modifications and changes may be made to the present disclosure. Any modifications, equivalent substitutions, and improvements made within the spirit and principles of the disclosure shall be encompassed in the scope of protection of the present disclosure.

## Claims

1. A resource allocation method, applied to a base station and comprising:
sending bandwidth part (BWP) frequency domain resource configuration information to a user equipment, wherein the BWP frequency domain resource configuration information comprises a mapping relationship between resource identifier and sub-band full duplex (SBFD) frequency domain resource; and the resource identifier comprises a BWP identifier and a carrier identifier; and
sending target BWP indication information to the user equipment, wherein the target BWP indication information is configured to enable the user equipment to obtain a target BWP configuration pair corresponding to the target BWP indication information from a BWP activation configuration table, and the target BWP configuration pair comprises a target BWP identifier and a target carrier identifier, and to determine, based on the mapping relationship between the resource identifier and the SBFD frequency domain resource, a target SBFD frequency domain resource associated with the target BWP identifier and the target carrier identifier; wherein the BWP activation configuration table comprises a mapping relationship between BWP indication information and BWP configuration pair.

2. The method of claim 1, wherein the BWP identifier comprises an uplink BWP identifier and a downlink BWP identifier, the uplink BWP identifier and the downlink BWP identifier are same, and the carrier identifier comprises a first carrier identifier and a second carrier identifier, wherein,
the uplink BWP identifier corresponds to the first carrier identifier, and the downlink BWP identifier corresponds to the second carrier identifier; or,
the uplink BWP identifier corresponds to the first carrier identifier, and the uplink BWP identifier and the downlink BWP identifier both correspond to the second carrier identifier; or,
the downlink BWP identifier corresponds to the first carrier identifier, and the uplink BWP identifier and the downlink BWP identifier both correspond to the second carrier identifier; or,
the uplink BWP identifier and the downlink BWP identifier both correspond to the first carrier identifier, and the uplink BWP identifier and the downlink BWP identifier both correspond to the second carrier identifier.

3. The method of claim 1, wherein the BWP identifier comprises an uplink BWP identifier and a downlink BWP identifier, and the uplink BWP identifier and the downlink BWP identifier are different; the carrier identifier comprises a first carrier identifier and a second carrier identifier, the uplink BWP identifier corresponds to the first carrier identifier, and the downlink BWP identifier corresponds to the second carrier identifier; or,
the BWP identifier comprises a first uplink BWP identifier, a first downlink BWP identifier, a second uplink BWP identifier, and a second downlink BWP identifier, the first uplink BWP identifier and the first downlink BWP identifier are same, the second uplink BWP identifier and the second downlink BWP identifier are same, the first uplink BWP identifier and the second uplink BWP identifier are different, and the first downlink BWP identifier and the second downlink BWP identifier are different; the carrier identifier comprises a first carrier identifier and a second carrier identifier, the first uplink BWP identifier and the first downlink BWP identifier correspond to the first carrier identifier, and the second uplink BWP identifier and the second downlink BWP identifier correspond to the second carrier identifier.

4. The method of any one of claims 1 to 3, wherein the SBFD frequency domain resource is a frequency domain resource configured within a carrier indicated by the carrier identifier, and the SBFD frequency domain resource is a frequency domain resource corresponding to the BWP identifier;
wherein, the SBFD frequency domain resource corresponding to the uplink BWP identifier is different from the SBFD frequency domain frequency corresponding to the downlink BWP identifier, and the SBFD frequency domain resource corresponding to the uplink BWP identifier is identical to or different from the SBFD frequency domain frequency corresponding to the downlink BWP identifier in size; and
the carriers indicated by different carrier identifiers are carriers of an SBFD intra-subband or carriers of an SBFD inter-subband.

5. The method of claim 1, wherein,
before sending the target BWP indication information to the user equipment, the method further comprises:
sending the BWP activation configuration table to the user equipment through a radio resource control (RRC) message.

6. The method of claim 1 or 5, wherein each BWP configuration pair in the BWP activation configuration table comprises a downlink BWP identifier and a carrier identifier corresponding to the downlink BWP identifier, and an uplink BWP identifier and a carrier identifier corresponding to the uplink BWP identifier;
wherein the target BWP configuration pair comprises a target downlink BWP identifier and a target uplink BWP identifier, and the target downlink BWP identifier and the target uplink BWP identifier are same or different; and
the target BWP configuration pair comprises a carrier identifier corresponding to the target downlink BWP identifier and a carrier identifier corresponding to the target uplink BWP identifier, and the carrier identifier corresponding to the target downlink BWP identifier and the carrier identifier corresponding to the target uplink BWP identifier are same or different.

7. The method of claim 1 or 5, wherein,
each BWP configuration pair in the BWP activation configuration table comprises a first configuration sub-pair and a second configuration sub-pair; the first configuration sub-pair comprises a first downlink BWP identifier and a carrier identifier corresponding to the first downlink BWP identifier, and a first uplink BWP identifier and a carrier identifier corresponding to the first uplink BWP identifier; the second configuration sub-pair comprises a second downlink BWP identifier and a carrier identifier corresponding to the second downlink BWP identifier, and a second uplink BWP identifier and a carrier identifier corresponding to the second uplink BWP identifier;
wherein the target BWP configuration pair comprises a target first configuration sub-pair and a target second configuration sub-pair;
the target first configuration sub-pair comprises a target first downlink BWP identifier and a target first uplink BWP identifier, and the target first downlink BWP identifier and the target first uplink BWP identifier are same or different; the target first configuration sub-pair comprises a carrier identifier corresponding to the target first downlink BWP identifier and a carrier identifier corresponding to the target first uplink BWP identifier, and the carrier identifier corresponding to the target first downlink BWP identifier and the carrier identifier corresponding to the target first uplink BWP identifier are same or different; and
the target second configuration sub-pair comprises a target second downlink BWP identifier and a target second uplink BWP identifier, and the target second downlink BWP identifier and the target second uplink BWP identifier are same or different; the target second configuration sub-pair comprises a carrier identifier corresponding to the target second downlink BWP identifier and a carrier identifier corresponding to the target second uplink BWP identifier, and the carrier identifier corresponding to the target second downlink BWP identifier and the carrier identifier corresponding to the target second uplink BWP identifier are same or different.

8. The method of claim 1, wherein sending the target BWP indication information to the user equipment comprises: sending a BWP activation configuration to the user equipment through a downlink control information (DCI) message; or, sending a BWP activation configuration to the user equipment through a medium access control-control element (MAC-CE) message; or, sending a BWP activation configuration to the user equipment through a RRC message; wherein,
the BWP activation configuration comprises the target BWP indication information and a switching flag; if the switching flag is a first value, the user equipment is indicated to obtain the target BWP configuration pair corresponding to the target BWP indication information from the BWP activation configuration table; and if the switching flag is not the first value, the user equipment is indicated not to obtain the target BWP configuration pair corresponding to the target BWP indication information from the BWP activation configuration table; or,
the BWP activation configuration comprises the target BWP indication information; if the target BWP indication information is a target value, the user equipment is indicated not to obtain the target BWP configuration pair corresponding to the target BWP indication information from the BWP activation configuration table; and if the target BWP indication information is not the target value, the user equipment is indicated to obtain the target BWP configuration pair corresponding to the target BWP indication information from the BWP activation configuration table.

9. The method of claim 1, wherein,
after sending the target BWP indication information to the user equipment, the method further comprises:
within a BWP switching time, if the SBFD frequency domain resource used by the user equipment changes, obtaining updated target BWP indication information, wherein the updated target BWP indication information corresponds to the changed SBFD frequency domain resource; and
sending the updated target BWP indication information to the user equipment, wherein the updated target BWP indication information is configured to enable the user equipment to obtain the target BWP configuration pair corresponding to the updated target BWP indication information from the BWP activation configuration table.

10. A resource allocation method, applied to a user equipment and comprising:
receiving bandwidth part (BWP) frequency domain resource configuration information from a base station, wherein the BWP frequency domain resource configuration information comprises a mapping relationship between resource identifier and sub-band full duplex (SBFD) frequency domain resource; and the resource identifier comprises a BWP identifier and a carrier identifier;
receiving target BWP indication information from the base station, and obtaining a target BWP configuration pair corresponding to the target BWP indication information from an obtained BWP activation configuration table, wherein the target BWP configuration pair comprises a target BWP identifier and a target carrier identifier; the BWP activation configuration table comprises a mapping relationship between BWP indication information and BWP configuration pair; and
determining, based on the mapping relationship between resource identifier and SBFD frequency domain resource, a target SBFD frequency domain resource associated with the target BWP identifier and the target carrier identifier in the target BWP configuration pair.

11. The method of claim 10, wherein the BWP identifier comprises an uplink BWP identifier and a downlink BWP identifier, the uplink BWP identifier and the downlink BWP identifier are same, and the carrier identifier comprises a first carrier identifier and a second carrier identifier, wherein,
the uplink BWP identifier corresponds to the first carrier identifier, and the downlink BWP identifier corresponds to the second carrier identifier; or,
the uplink BWP identifier corresponds to the first carrier identifier, and the uplink BWP identifier and the downlink BWP identifier both correspond to the second carrier identifier; or,
the downlink BWP identifier corresponds to the first carrier identifier, and the uplink BWP identifier and the downlink BWP identifier both correspond to the second carrier identifier; or,
the uplink BWP identifier and the downlink BWP identifier both correspond to the first carrier identifier, and the uplink BWP identifier and the downlink BWP identifier both correspond to the second carrier identifier.

12. The method of claim 10, wherein the BWP identifier comprises an uplink BWP identifier and a downlink BWP identifier, and the uplink BWP identifier and the downlink BWP identifier are different; the carrier identifier comprises a first carrier identifier and a second carrier identifier, the uplink BWP identifier corresponds to the first carrier identifier, and the downlink BWP identifier corresponds to the second carrier identifier; or,
the BWP identifier comprises a first uplink BWP identifier, a first downlink BWP identifier, a second uplink BWP identifier, and a second downlink BWP identifier, the first uplink BWP identifier and the first downlink BWP identifier are same, the second uplink BWP identifier and the second downlink BWP identifier are same, the first uplink BWP identifier and the second uplink BWP identifier are different, and the first downlink BWP identifier and the second downlink BWP identifier are different; the carrier identifier comprises a first carrier identifier and a second carrier identifier, the first uplink BWP identifier and the first downlink BWP identifier correspond to the first carrier identifier, and the second uplink BWP identifier and the second downlink BWP identifier correspond to the second carrier identifier.

13. The method of any one of claims 10 to 12, wherein the SBFD frequency domain resource is a frequency domain resource configured within a carrier indicated by the carrier identifier, and the SBFD frequency domain resource is a frequency domain resource corresponding to the BWP identifier;
wherein, the SBFD frequency domain resource corresponding to the uplink BWP identifier is different from the SBFD frequency domain frequency corresponding to the downlink BWP identifier, and the SBFD frequency domain resource corresponding to the uplink BWP identifier is identical to or different from the SBFD frequency domain frequency corresponding to the downlink BWP identifier in size; and
the carriers indicated by different carrier identifiers are carriers of an SBFD intra-subband or carriers of an SBFD inter-subband.

14. The method of claim 10, wherein,
before receiving the target BWP indication information from the base station, the method further comprises:
obtaining the BWP activation configuration table pre-configured in the user equipment; or,
receiving the BWP activation configuration table from the base station through a radio resource control (RRC) message.

15. The method of claim 10 or 14, wherein each BWP configuration pair in the BWP activation configuration table comprises a downlink BWP identifier and a carrier identifier corresponding to the downlink BWP identifier, and an uplink BWP identifier and a carrier identifier corresponding to the uplink BWP identifier;
wherein the target BWP configuration pair comprises a target downlink BWP identifier and a target uplink BWP identifier, and the target downlink BWP identifier and the target uplink BWP identifier are same or different; and
the target BWP configuration pair comprises a carrier identifier corresponding to the target downlink BWP identifier and a carrier identifier corresponding to the target uplink BWP identifier, and the carrier identifier corresponding to the target downlink BWP identifier and the carrier identifier corresponding to the target uplink BWP identifier are same or different.

16. The method of claim 10 or 14, wherein,
each BWP configuration pair in the BWP activation configuration table comprises a first configuration sub-pair and a second configuration sub-pair; the first configuration sub-pair comprises a first downlink BWP identifier and a carrier identifier corresponding to the first downlink BWP identifier, and a first uplink BWP identifier and a carrier identifier corresponding to the first uplink BWP identifier; the second configuration sub-pair comprises a second downlink BWP identifier and a carrier identifier corresponding to the second downlink BWP identifier, and a second uplink BWP identifier and a carrier identifier corresponding to the second uplink BWP identifier;
wherein the target BWP configuration pair comprises a target first configuration sub-pair and a target second configuration sub-pair;
the target first configuration sub-pair comprises a target first downlink BWP identifier and a target first uplink BWP identifier, and the target first downlink BWP identifier and the target first uplink BWP identifier are same or different; the target first configuration sub-pair comprises a carrier identifier corresponding to the target first downlink BWP identifier and a carrier identifier corresponding to the target first uplink BWP identifier, and the carrier identifier corresponding to the target first downlink BWP identifier and the carrier identifier corresponding to the target first uplink BWP identifier are same or different; and
the target second configuration sub-pair comprises a target second downlink BWP identifier and a target second uplink BWP identifier, and the target second downlink BWP identifier and the target second uplink BWP identifier are same or different; the target second configuration sub-pair comprises a carrier identifier corresponding to the target second downlink BWP identifier and a carrier identifier corresponding to the target second uplink BWP identifier, and the carrier identifier corresponding to the target second downlink BWP identifier and the carrier identifier corresponding to the target second uplink BWP identifier are same or different.

17. The method of claim 10, wherein receiving the target BWP indication information from the base station comprises: receiving a BWP activation configuration from the base station through a downlink control information (DCI) message; or, receiving a BWP activation configuration from the base station through a medium access control-control element (MAC-CE) message; or, receiving a BWP activation configuration from the base station through a RRC message; wherein,
the BWP activation configuration comprises the target BWP indication information and a switching flag;
if the switching flag is a first value, the user equipment is indicated to obtain the target BWP configuration pair corresponding to the target BWP indication information from the BWP activation configuration table; and
if the switching flag is not the first value, the user equipment is prohibited to obtain the target BWP configuration pair corresponding to the target BWP indication information from the BWP activation configuration table; or,
the BWP activation configuration comprises the target BWP indication information;
if the target BWP indication information is a target value, the user equipment is prohibited to obtain the target BWP configuration pair corresponding to the target BWP indication information from the BWP activation configuration table; and
if the target BWP indication information is not the target value, the user equipment is indicated to obtain the target BWP configuration pair corresponding to the target BWP indication information from the BWP activation configuration table.

18. The method of claim 10, wherein,
after receiving the target BWP indication information from the base station, the method further comprises:
within a BWP switching time, receiving updated target BWP indication information from the base station, wherein the updated target BWP indication information corresponds to a changed SBFD frequency domain resource; obtaining the target BWP configuration pair corresponding to the updated target BWP indication information from the BWP activation configuration table.

19. A resource allocation method, applied to a base station and comprising:
sending sub-band full duplex (SBFD) resource allocation information to a user equipment, wherein the SBFD resource allocation information is configured to indicate SBFD frequency domain resources configured in multiple carriers in a carrier set, or an SBFD frequency domain resource configured in each carrier of multiple carriers; wherein in the SBFD frequency domain resources configured in multiple carriers in the carrier set, there is at least one set of opposite slots in different carriers of the carrier set; wherein in the SBFD frequency domain resource configured in each carrier of multiple carriers, there is at least one set of opposite slots in the carrier; wherein the opposite slots comprise uplink slot and downlink slot; and
sending SBFD configuration information corresponding to the carrier to the user equipment, wherein the SBFD configuration information is configured to indicate that the SBFD frequency domain resource in the carrier is valid or invalid.

20. The method of claim 19, wherein the SBFD resource allocation information being configured to indicate the SBFD frequency domain resources configured in multiple carriers in the carrier set, comprises followings:
the SBFD resource allocation information comprising a first allocation indication and a second allocation indication; wherein for each carrier of the multiple carriers, the first allocation indication is configured to configure all slots comprised in the carrier as flexible slots, and the second allocation indication is configured to indicate each flexible slot is used for an uplink slot or a downlink slot; or,
the SBFD resource allocation information comprising a third allocation indication; wherein for each carrier of the multiple carriers, the third allocation indication is configured to configure each slot comprised in the carrier as an uplink slot or a downlink slot; or,
the SBFD resource allocation information comprising a fourth allocation indication and a fifth allocation indication; wherein for a first carrier in the multiple carriers, the fourth allocation indication is configured to configure each slot comprised in the first carrier as an uplink slot or a downlink slot; wherein for a second carrier other than the first carrier, the fifth allocation indication is configured to indicate an offset between the second carrier and the first carrier.

21. The method of claim 20, wherein the fifth allocation indication is further configured to indicate whether the offset between the second carrier and the first carrier is valid.

22. The method of claim 19, wherein when the SBFD configuration information corresponding to the carrier is sent to the user equipment, for a third carrier in the multiple carriers, if the SBFD configuration information comprises a deactivation indication of the third carrier, the deactivation indication is configured to perform deactivation on the third carrier, and the deactivation indication is configured to indicate that the SBFD frequency domain resource in the third carrier is invalid.

23. The method of claim 19, wherein when the SBFD configuration information corresponding to the carrier is sent to the user equipment, for a fourth carrier in the multiple carriers, if the SBFD configuration information comprises an activation indication and a validation indication of the fourth carrier, the activation indication is configured to perform activation on the fourth carrier, and the validation indication is configured to indicate that the SBFD frequency domain resource in the fourth carrier is valid or invalid.

24. A resource allocation method, applied to a user equipment and comprising:
receiving sub-band full duplex (SBFD) resource allocation information from a base station, wherein the SBFD resource allocation information is configured to indicate SBFD frequency domain resources configured in multiple carriers in a carrier set, or an SBFD frequency domain resource configured in each carrier of the multiple carriers; wherein in the SBFD frequency domain resources configured in multiple carriers in the carrier set, there is at least one set of opposite slots in different carriers of the carrier set; wherein in the SBFD frequency domain resource configured in each carrier of multiple carriers, there is at least one set of opposite slots in the carrier; wherein the opposite slots comprise uplink slot and downlink slot; and
receiving SBFD configuration information corresponding to the carrier from the base station, wherein the SBFD configuration information is configured to indicate that the SBFD frequency domain resource in the carrier is valid or invalid.

25. The method of claim 24, wherein the SBFD resource allocation information being configured to indicate the SBFD frequency domain resources configured in multiple carriers in the carrier set, comprises followings:
the SBFD resource allocation information comprising a first allocation indication and a second allocation indication; wherein for each carrier of the multiple carriers, the first allocation indication is configured to configure all slots comprised in the carrier as flexible slots, and the second allocation indication is configured to indicate each flexible slot is used for an uplink slot or a downlink slot; or,
the SBFD resource allocation information comprising a third allocation indication; wherein for each carrier of the multiple carriers, the third allocation indication is configured to configure each slot comprised in the carrier as an uplink slot or a downlink slot; or,
the SBFD resource allocation information comprising a fourth allocation indication and a fifth allocation indication; wherein for a first carrier in the multiple carriers, the fourth allocation indication is configured to configure each slot comprised in the first carrier as an uplink slot or a downlink slot; wherein for a second carrier other than the first carrier, the fifth allocation indication is configured to indicate an offset between the second carrier and the first carrier.

26. The method of claim 25, wherein the fifth allocation indication is further configured to indicate whether the offset between the second carrier and the first carrier is valid.

27. The method of claim 24, wherein when the SBFD configuration information corresponding to the carrier is received from the base station, for a third carrier in the multiple carriers, if the SBFD configuration information comprises a deactivation indication of the third carrier, the deactivation indication is configured to perform deactivation on the third carrier, and the deactivation indication is configured to indicate that the SBFD frequency domain resource in the third carrier is invalid.

28. The method of claim 24, wherein when the SBFD configuration information corresponding to the carrier is received from the base station, for a fourth carrier in the multiple carriers, if the SBFD configuration information comprises an activation indication and a validation indication of the fourth carrier, the activation indication is configured to perform activation on the fourth carrier, and the validation indication is configured to indicate that the SBFD frequency domain resource in the fourth carrier is valid or invalid.

29. A resource allocation apparatus, applied to a base station and comprising:
an obtaining module, configured to obtain bandwidth part (BWP) frequency domain resource configuration information; and
a sending module, configured to send the BWP frequency domain resource configuration information to a user equipment, wherein the BWP frequency domain resource configuration information comprises a mapping relationship between resource identifier and sub-band full duplex (SBFD) frequency domain resource; and the resource identifier comprises a BWP identifier and a carrier identifier;
wherein the sending module is further configured to send target BWP indication information to the user equipment, wherein the target BWP indication information is configured to enable the user equipment to obtain a target BWP configuration pair corresponding to the target BWP indication information from a BWP activation configuration table, and the target BWP configuration pair comprises a target BWP identifier and a target carrier identifier, and to determine, based on the mapping relationship between the resource identifier and the SBFD frequency domain resource, a target SBFD frequency domain resource associated with the target BWP identifier and the target carrier identifier; wherein the BWP activation configuration table comprises a mapping relationship between BWP indication information and BWP configuration pair.

30. The apparatus of claim 29, wherein the BWP identifier comprises an uplink BWP identifier and a downlink BWP identifier, the uplink BWP identifier and the downlink BWP identifier are same, and the carrier identifier comprises a first carrier identifier and a second carrier identifier, wherein,
the uplink BWP identifier corresponds to the first carrier identifier, and the downlink BWP identifier corresponds to the second carrier identifier; or,
the uplink BWP identifier corresponds to the first carrier identifier, the uplink BWP identifier and the downlink BWP identifier both correspond to the second carrier identifier; or,
the downlink BWP identifier corresponds to the first carrier identifier, the uplink BWP identifier and the downlink BWP identifier both correspond to the second carrier identifier; or,
the uplink BWP identifier and the downlink BWP identifier both correspond to the first carrier identifier, and the uplink BWP identifier and the downlink BWP identifier both correspond to the second carrier identifier.

31. The apparatus of claim 29, wherein the BWP identifier comprises an uplink BWP identifier and a downlink BWP identifier, and the uplink BWP identifier and the downlink BWP identifier are different; the carrier identifier comprises a first carrier identifier and a second carrier identifier, the uplink BWP identifier corresponds to the first carrier identifier, and the downlink BWP identifier corresponds to the second carrier identifier; or,
the BWP identifier comprises a first uplink BWP identifier, a first downlink BWP identifier, a second uplink BWP identifier, and a second downlink BWP identifier, the first uplink BWP identifier and the first downlink BWP identifier are same, the second uplink BWP identifier and the second downlink BWP identifier are same, the first uplink BWP identifier and the second uplink BWP identifier are different, and the first downlink BWP identifier and the second downlink BWP identifier are different; the carrier identifier comprises a first carrier identifier and a second carrier identifier, the first uplink BWP identifier and the first downlink BWP identifier correspond to the first carrier identifier, and the second uplink BWP identifier and the second downlink BWP identifier correspond to the second carrier identifier.

32. The apparatus of any one of claims 29 to 31, wherein the SBFD frequency domain resource is a frequency domain resource configured within a carrier indicated by the carrier identifier, and the SBFD frequency domain resource is a frequency domain resource corresponding to the BWP identifier;
wherein, the SBFD frequency domain resource corresponding to the uplink BWP identifier is different from the SBFD frequency domain frequency corresponding to the downlink BWP identifier, and the SBFD frequency domain resource corresponding to the uplink BWP identifier is identical to or different from the SBFD frequency domain frequency corresponding to the downlink BWP identifier in size; and
the carriers indicated by different carrier identifiers are carriers of an SBFD intra-subband or carriers of an SBFD inter-subband.

33. The apparatus of claim 29, wherein the sending module is further configured to send the BWP activation configuration table to the user equipment through a radio resource control (RRC) message.

34. The apparatus of claim 29 or 33, wherein each BWP configuration pair in the BWP activation configuration table comprises a downlink BWP identifier and a carrier identifier corresponding to the downlink BWP identifier, and an uplink BWP identifier and a carrier identifier corresponding to the uplink BWP identifier;
wherein the target BWP configuration pair comprises a target downlink BWP identifier and a target uplink BWP identifier, and the target downlink BWP identifier and the target uplink BWP identifier are same or different; and
the target BWP configuration pair comprises a carrier identifier corresponding to the target downlink BWP identifier and a carrier identifier corresponding to the target uplink BWP identifier, and the carrier identifier corresponding to the target downlink BWP identifier and the carrier identifier corresponding to the target uplink BWP identifier are same or different.

35. The apparatus of claim 29 or 33, wherein,
each BWP configuration pair in the BWP activation configuration table comprises a first configuration sub-pair and a second configuration sub-pair; the first configuration sub-pair comprises a first downlink BWP identifier and a carrier identifier corresponding to the first downlink BWP identifier, and a first uplink BWP identifier and a carrier identifier corresponding to the first uplink BWP identifier; the second configuration sub-pair comprises a second downlink BWP identifier and a carrier identifier corresponding to the second downlink BWP identifier, and a second uplink BWP identifier and a carrier identifier corresponding to the second uplink BWP identifier;
wherein the target BWP configuration pair comprises a target first configuration sub-pair and a target second configuration sub-pair;
the target first configuration sub-pair comprises a target first downlink BWP identifier and a target first uplink BWP identifier, and the target first downlink BWP identifier and the target first uplink BWP identifier are same or different; the target first configuration sub-pair comprises a carrier identifier corresponding to the target first downlink BWP identifier and a carrier identifier corresponding to the target first uplink BWP identifier, and the carrier identifier corresponding to the target first downlink BWP identifier and the carrier identifier corresponding to the target first uplink BWP identifier are same or different; and
the target second configuration sub-pair comprises a target second downlink BWP identifier and a target second uplink BWP identifier, and the target second downlink BWP identifier and the target second uplink BWP identifier are same or different; the target second configuration sub-pair comprises a carrier identifier corresponding to the target second downlink BWP identifier and a carrier identifier corresponding to the target second uplink BWP identifier, and the carrier identifier corresponding to the target second downlink BWP identifier and the carrier identifier corresponding to the target second uplink BWP identifier are same or different.

36. The apparatus of claim 29, wherein when sending the target BWP indication information to the user equipment, the sending module is specifically configured to: send a BWP activation configuration to the user equipment through a Downlink Control Information (DCI) message; or, send a BWP activation configuration to the user equipment through a Medium Access Control-Control Element (MAC-CE) message; or, send a BWP activation configuration to the user equipment through a RRC message; wherein,
the BWP activation configuration comprises the target BWP indication information and a switching flag; if the switching flag is a first value, the user equipment is indicated to obtain the target BWP configuration pair corresponding to the target BWP indication information from the BWP activation configuration table; and if the switching flag is not the first value, the user equipment is indicated not to obtain the target BWP configuration pair corresponding to the target BWP indication information from the BWP activation configuration table; or,
the BWP activation configuration comprises the target BWP indication information; if the target BWP indication information is a target value, the user equipment is indicated not to obtain the target BWP configuration pair corresponding to the target BWP indication information from the BWP activation configuration table; and if the target BWP indication information is not the target value, the user equipment is indicated to obtain the target BWP configuration pair corresponding to the target BWP indication information from the BWP activation configuration table.

37. The apparatus of claim 29, wherein,
the obtaining module is further configured to, within a BWP switching time, if the SBFD frequency domain resource used by the user equipment changes, obtain updated target BWP indication information, wherein the updated target BWP indication information corresponds to the changed SBFD frequency domain resource; and
the sending module is further configured to send the updated target BWP indication information to the user equipment, wherein the updated target BWP indication information is configured to enable the user equipment to obtain the target BWP configuration pair corresponding to the updated target BWP indication information from the BWP activation configuration table.

38. A resource allocation apparatus, applied to a user equipment, and comprising:
a receiving module, configured to receive bandwidth part (BWP) frequency domain resource configuration information from a base station, wherein the BWP frequency domain resource configuration information comprises a mapping relationship between resource identifier and sub-band full duplex (SBFD) frequency domain resource; and the resource identifier comprises a BWP identifier and a carrier identifier;
wherein the receiving module is further configured to receive target BWP indication information from the base station;
an obtaining module, configured to obtain a target BWP configuration pair corresponding to the target BWP indication information from an obtained BWP activation configuration table, wherein the target BWP configuration pair comprises a target BWP identifier and a target carrier identifier; the BWP activation configuration table comprises a mapping relationship between BWP indication information and BWP configuration pair; and
a determining module, configured to, based on the mapping relationship between resource identifier and SBFD frequency domain resource, determine a target SBFD frequency domain resource associated with the target BWP identifier and the target carrier identifier in the target BWP configuration pair.

39. The apparatus of claim 38, wherein the BWP identifier comprises an uplink BWP identifier and a downlink BWP identifier, the uplink BWP identifier and the downlink BWP identifier are same, and the carrier identifier comprises a first carrier identifier and a second carrier identifier, wherein,
the uplink BWP identifier corresponds to the first carrier identifier, and the downlink BWP identifier corresponds to the second carrier identifier; or,
the uplink BWP identifier corresponds to the first carrier identifier, and the uplink BWP identifier and the downlink BWP identifier both correspond to the second carrier identifier; or,
the downlink BWP identifier corresponds to the first carrier identifier, and the uplink BWP identifier and the downlink BWP identifier both correspond to the second carrier identifier; or,
the uplink BWP identifier and the downlink BWP identifier both correspond to the first carrier identifier, and the uplink BWP identifier and the downlink BWP identifier both correspond to the second carrier identifier.

40. The apparatus of claim 38, wherein the BWP identifier comprises an uplink BWP identifier and a downlink BWP identifier, and the uplink BWP identifier and the downlink BWP identifier are different; the carrier identifier comprises a first carrier identifier and a second carrier identifier, the uplink BWP identifier corresponds to the first carrier identifier, and the downlink BWP identifier corresponds to the second carrier identifier; or,
the BWP identifier comprises a first uplink BWP identifier, a first downlink BWP identifier, a second uplink BWP identifier, and a second downlink BWP identifier, the first uplink BWP identifier and the first downlink BWP identifier are same, the second uplink BWP identifier and the second downlink BWP identifier are same, the first uplink BWP identifier and the second uplink BWP identifier are different, and the first downlink BWP identifier and the second downlink BWP identifier are different; the carrier identifier comprises a first carrier identifier and a second carrier identifier, the first uplink BWP identifier and the first downlink BWP identifier correspond to the first carrier identifier, and the second uplink BWP identifier and the second downlink BWP identifier correspond to the second carrier identifier.

41. The apparatus of any one of claims 38 to 40, wherein the SBFD frequency domain resource is a frequency domain resource configured within a carrier indicated by the carrier identifier, and the SBFD frequency domain resource is a frequency domain resource corresponding to the BWP identifier;
wherein, the SBFD frequency domain resource corresponding to the uplink BWP identifier is different from the SBFD frequency domain frequency corresponding to the downlink BWP identifier, and the SBFD frequency domain resource corresponding to the uplink BWP identifier is identical to or different from the SBFD frequency domain frequency corresponding to the downlink BWP identifier in size; and
the carriers indicated by different carrier identifiers are carriers of an SBFD intra-subband or carriers of an SBFD inter-subband.

42. The apparatus of claim 38, wherein,
the receiving module is further configured to obtain the BWP activation configuration table pre-configured in the user equipment; or, receive the BWP activation configuration table from the base station through a Radio Resource Control (RRC) message.

43. The apparatus of claim 38 or 42, wherein each BWP configuration pair in the BWP activation configuration table comprises a downlink BWP identifier and a carrier identifier corresponding to the downlink BWP identifier, and an uplink BWP identifier and a carrier identifier corresponding to the uplink BWP identifier;
wherein the target BWP configuration pair comprises a target downlink BWP identifier and a target uplink BWP identifier, and the target downlink BWP identifier and the target uplink BWP identifier are same or different; and
the target BWP configuration pair comprises a carrier identifier corresponding to the target downlink BWP identifier and a carrier identifier corresponding to the target uplink BWP identifier, and the carrier identifier corresponding to the target downlink BWP identifier and the carrier identifier corresponding to the target uplink BWP identifier are same or different.

44. The apparatus of claim 38 or 42, wherein,
each BWP configuration pair in the BWP activation configuration table comprises a first configuration sub-pair and a second configuration sub-pair; the first configuration sub-pair comprises a first downlink BWP identifier and a carrier identifier corresponding to the first downlink BWP identifier, and a first uplink BWP identifier and a carrier identifier corresponding to the first uplink BWP identifier; the second configuration sub-pair comprises a second downlink BWP identifier and a carrier identifier corresponding to the second downlink BWP identifier, and a second uplink BWP identifier and a carrier identifier corresponding to the second uplink BWP identifier;
wherein the target BWP configuration pair comprises a target first configuration sub-pair and a target second configuration sub-pair;
the target first configuration sub-pair comprises a target first downlink BWP identifier and a target first uplink BWP identifier, and the target first downlink BWP identifier and the target first uplink BWP identifier are same or different; the target first configuration sub-pair comprises a carrier identifier corresponding to the target first downlink BWP identifier and a carrier identifier corresponding to the target first uplink BWP identifier, and the carrier identifier corresponding to the target first downlink BWP identifier and the carrier identifier corresponding to the target first uplink BWP identifier are same or different; and
the target second configuration sub-pair comprises a target second downlink BWP identifier and a target second uplink BWP identifier, and the target second downlink BWP identifier and the target second uplink BWP identifier are same or different; the target second configuration sub-pair comprises a carrier identifier corresponding to the target second downlink BWP identifier and a carrier identifier corresponding to the target second uplink BWP identifier, and the carrier identifier corresponding to the target second downlink BWP identifier and the carrier identifier corresponding to the target second uplink BWP identifier are same or different.

45. The apparatus of claim 38, wherein when receiving the target BWP indication information from the base station, the receiving module is specifically configured to: receive a BWP activation configuration from the base station through a downlink control information (DCI) message; or, receive a BWP activation configuration from the base station through a medium access control-control element (MAC-CE) message; or, receive a BWP activation configuration from the base station through a RRC message;
the BWP activation configuration comprises the target BWP indication information and a switching flag;
if the switching flag is a first value, the obtaining module is further configured to obtain the target BWP configuration pair corresponding to the target BWP indication information from the BWP activation configuration table; and
if the switching flag is not the first value, the obtaining module is further configured to prohibit to obtain the target BWP configuration pair corresponding to the target BWP indication information from the BWP activation configuration table; or,
the BWP activation configuration comprises the target BWP indication information;
if the target BWP indication information is a target value, the obtaining module is further configured to prohibit to obtain the target BWP configuration pair corresponding to the target BWP indication information from the BWP activation configuration table; and
if the target BWP indication information is not the target value, the obtaining module is further configured to obtain the target BWP configuration pair corresponding to the target BWP indication information from the BWP activation configuration table.

46. The apparatus of claim 38, wherein,
the receiving module is further configured to, within a BWP switching time, receive updated target BWP indication information from the base station, wherein the updated target BWP indication information corresponds to a changed SBFD frequency domain resource; the obtaining module is further configured to obtain the target BWP configuration pair corresponding to the updated target BWP indication information from the BWP activation configuration table.

47. A resource allocation apparatus, applied to a base station and comprising:
an obtaining module, configured to obtain sub-band full duplex (SBFD) resource allocation information;
a sending module, configured to send the SBFD resource allocation information to a user equipment, wherein the SBFD resource allocation information is configured to indicate SBFD frequency domain resources configured in multiple carriers in a carrier set or an SBFD frequency domain resource configured in each carrier of multiple carriers; wherein in the SBFD frequency domain resources configured in multiple carriers in the carrier set, there is at least one set of opposite slots in different carriers of the carrier set; wherein in the SBFD frequency domain resource configured in each carrier of multiple carriers, there is at least one set of opposite slots in the carrier; wherein the opposite slots comprise uplink slot and downlink slot; and
the sending module is further configured to send SBFD configuration information corresponding to the carrier to the user equipment, wherein the SBFD configuration information is configured to indicate that the SBFD frequency domain resource in the carrier is valid or invalid.

48. The apparatus of claim 47, wherein the SBFD resource allocation information being configured to indicate the SBFD frequency domain resources configured in multiple carriers in the carrier set, comprises followings:
the SBFD resource allocation information comprising a first allocation indication and a second allocation indication; wherein for each carrier of the multiple carriers, the first allocation indication is configured to configure all slots comprised in the carrier as flexible slots, and the second allocation indication is configured to indicate each flexible slot is used for an uplink slot or a downlink slot;
or, the SBFD resource allocation information comprising a third allocation indication; wherein for each carrier of the multiple carriers, the third allocation indication is configured to configure each slot comprised in the carrier as an uplink slot or a downlink slot;
or, the SBFD resource allocation information comprising a fourth allocation indication and a fifth allocation indication; wherein for a first carrier in the multiple carriers, the fourth allocation indication is configured to configure each slot comprised in the first carrier as an uplink slot or a downlink slot; wherein for a second carrier other than the first carrier, the fifth allocation indication is configured to indicate an offset between the second carrier and the first carrier.

49. The apparatus of claim 48, wherein the fifth allocation indication is further configured to indicate whether the offset between the second carrier and the first carrier is valid.

50. The apparatus of claim 47, wherein when the SBFD configuration information corresponding to the carrier is sent to the user equipment, for a third carrier in the multiple carriers, if the SBFD configuration information comprises a deactivation indication of the third carrier, the deactivation indication is configured to perform deactivation on the third carrier, and the deactivation indication is configured to indicate that the SBFD frequency domain resource in the third carrier is invalid.

51. The apparatus of claim 47, wherein when the SBFD configuration information corresponding to the carrier is sent to the user equipment, for a fourth carrier in the multiple carriers, if the SBFD configuration information comprises an activation indication and a validation indication of the fourth carrier, the activation indication is configured to perform activation on the fourth carrier and the validation indication is configured to indicate that the SBFD frequency domain resource in the fourth carrier is valid or invalid.

52. A resource allocation apparatus, applied to a user equipment and comprising:
a receiving module, configured to receive sub-band full duplex (SBFD) resource allocation information from a base station, wherein the SBFD resource allocation information is configured to indicate SBFD frequency domain resources configured in multiple carriers in a carrier set, or an SBFD frequency domain resource configured in each carrier of the multiple carriers; wherein in the SBFD frequency domain resources configured in multiple carriers in the carrier set, there is at least one set of opposite slots in different carriers of the carrier set; wherein in the SBFD frequency domain resource configured in each carrier of multiple carriers, there is at least one set of opposite slots in the carrier; wherein the opposite slots comprise uplink slot and downlink slot; and
wherein the receiving module is further configured to receive SBFD configuration information corresponding to the carrier from the base station, wherein the SBFD configuration information is configured to indicate that the SBFD frequency domain resource in the carrier is valid or invalid;
a determining module, configured to, based on the SBFD configuration information corresponding to the carrier, determine the SBFD frequency domain resource in the carrier is valid or invalid.

53. The apparatus of claim 52, wherein the SBFD resource allocation information being configured to indicate the SBFD frequency domain resources configured in multiple carriers in the carrier set, comprises followings:
the SBFD resource allocation information comprises a first allocation indication and a second allocation indication; wherein for each carrier of the multiple carriers, the first allocation indication is configured to configure all slots comprised in the carrier as flexible slots, and the second allocation indication is configured to indicate each flexible slot is used for an uplink slot or a downlink slot;
or, the SBFD resource allocation information comprising a third allocation indication; wherein for each carrier of the multiple carriers, the third allocation indication is configured to configure each slot comprised in the carrier as an uplink slot or a downlink slot;
or, the SBFD resource allocation information comprising a fourth allocation indication and a fifth allocation indication; wherein for a first carrier in the multiple carriers, the fourth allocation indication is configured to configure each slot comprised in the first carrier as an uplink slot or a downlink slot; wherein for a second carrier other than the first carrier, the fifth allocation indication is configured to indicate an offset between the second carrier and the first carrier.

54. The apparatus of claim 53, wherein the fifth allocation indication is further configured to indicate whether the offset between the second carrier and the first carrier is valid.

55. The apparatus of claim 52, wherein when the SBFD configuration information corresponding to the carrier is received from the base station, for a third carrier in the multiple carriers, if the SBFD configuration information comprises a deactivation indication of the third carrier, the deactivation indication is configured to perform deactivation on the third carrier, and the deactivation indication is configured to indicate that the SBFD frequency domain resource in the third carrier is invalid.

56. The apparatus of claim 52, wherein when the SBFD configuration information corresponding to the carrier is received from the base station, for a fourth carrier in the multiple carriers, if the SBFD configuration information comprises an activation indication and a validation indication of the fourth carrier, the activation indication is configured to perform activation on the fourth carrier and the validation indication is configured to indicate that the SBFD frequency domain resource in the fourth carrier is valid or invalid.

57. A base station, comprising a processor and a machine-readable storage medium, wherein the machine-readable storage medium stores machine executable instructions executable by the processor; the processor is configured to execute the machine executable instructions to perform the method of any one of claims 1 to 9 and 19 to 23.

58. A user equipment, comprising a processor and a machine-readable storage medium, wherein the machine-readable storage medium stores machine executable instructions executable by the processor; the processor is configured to execute the machine executable instructions to perform the method of any one of claims 10 to 18 and 24 to 28.
